(19) Europäisches Patentamt

European Patent Office

Office européen des brevets

(11) **EP 0 939 726 B1**

(12) **EUROPEAN PATENT SPECIFICATION**

(45) Date of publication and mention
of the grant of the patent:
**11.05.2005 Bulletin 2005/19**

(51) Int Cl.[7]: **F03G 3/08**, B64G 1/40,
F03G 3/00

(21) Application number: **97949538.9**

(22) Date of filing: **18.11.1997**

(86) International application number:
**PCT/US1997/021342**

(87) International publication number:
**WO 1998/022341 (28.05.1998 Gazette 1998/21)**

(54) **THRUST LEVITATION**

ERZIELUNG EINES SCHWEBEZUSTANDES MITTELS SCHUB

SUSTENTATION PAR POUSSEE

(84) Designated Contracting States:
**DE FR GB IT**

(30) Priority: **20.11.1996 US 31413 P**
**10.12.1996 US 33299 P**
**10.12.1996 US 33300 P**
**07.07.1997 US 888932**

(43) Date of publication of application:
**08.09.1999 Bulletin 1999/36**

(73) Proprietor: **Gravit-E**
**Bremerton, WA 98311-9208 (US)**

(72) Inventors:
• **SMITH, Boyd, E.**
**Bremerton, WA 98311-9208 (US)**
• **VINCENT, Mervin, C.**
**Kent, WA 98042 (US)**

(74) Representative:
**Miller, James Lionel Woolverton et al**
**Kilburn & Strode,**
**20 Red Lion Street**
**London WC1R 4PJ (GB)**

(56) References cited:
**WO-A-86/05852**          **DE-A- 3 620 171**
**FR-A- 560 857**          **GB-A- 2 207 753**
**GB-A- 2 225 424**          **GB-A- 2 299 857**

• **PAWLICKI T. B.: "How To Build a Flying Saucer And Other Proposals in Speculative Engineering" 1981, PRENTICE-HALL INC., NEW JERSEY (US) XP002232881 * page 69-86 ***
• **PAWLICKI T.B., "How to Build a Flying Saucer: And Other Proposals in Speculative Engineering", published 1981, by PRENTICE-HALL INC., (NEW JERSEY), p. 69-86.**

**Description**

TECHNICAL FIELD

The disclosure herein about thrust levitation reveals, and predicts new break-through concepts and technical innovations that make possible and foretell an exciting and bountiful future exploring the universe and living in space. These new technologies, jointly referred to as thrust levitation, are foundation technologies that will come into fruition during the 21st century and, as a result, will forever change the world with a new industrial revolution. The new opportunities that are foretold by this invention disclosure are based on a fundamental new understanding of physics that allows thrust levitation propulsion systems and technologies to be developed. The concepts and technologies presented and explained convert energy to thrust drive without the expulsion of mass and are used in order to develop system analyses for mechanisms that are based on torque to force vector analysis derivations.

BACKGROUND

This invention can provide vehicle propulsion and other capabilities that have many applications and that in the future will be of interest to industry in order to allow and embrace change and continue to make technology an ally. This invention, considering only the propulsion capabilities that can be provided by thrust levitation, constitutes a new level of both technical and cost performance that industry will be compelled to use in order to provide both the best and competitive vehicles, systems, and equipment for future commerce. Further, this invention constitutes the development of new areas of technology, foundation technologies, that will ultimately replace current technologies in several areas and that will open up whole new areas of opportunities for the commercial sectors of the world economies. This statement is being made based on the conviction that this invention will provide a new propulsive technology and other technologies that are described in this invention disclosure, are obvious extensions of this invention that are being claimed by this patent, and that will become even more obvious in the future to those who are practitioners of these new technologies. The new level of performance (propulsive, cost efficiency, safety, and etc.) achievable with this invention can be expected to serve many public applications.

The principle concepts developed by this invention describe how energy can be directly and efficiently converted into inertia without the expulsion of mass and how this inertia can be used for propulsive lift, precise vehicle control, and for the operation of vehicles in the atmosphere and in space. Additionally, other technologies are disclosed that are intended to be protected and covered by this patent application and that are associated with and are considered to be a part of thrust levitation technology. Information is included for those with prior art and ordinary skills in science and engineering that describes and characterizes preferred forms for thrust levitation mechanisms and vehicles and presents how to make and use these forms Thrust levitation and other associated technologies include inertial field levitation, inertial beam force technology, spatial warp technology, inertial beam wave (or gravity wave) technology, and new vehicle preferred design and configuration forms and other vehicle mechanism forms such as an automobile with significant merit.

The mechanisms and technologies disclosed and discussed herein are disclosed and discussed in previously filed U.S. provisional patent applications Serial No. 60/031,413, entitled Thrust Levitation Technologies, filed November 20, 1996; Serial No. 60/033,299, entitled Advanced Technology Propulsion Study, filed December 10, 1996; and Serial No. 60/033,300, entitled Thrust Levitation Technologies. filed December 10, 1996; and of United States utility patent application Ser. No. 08/888,932, entitled Advanced Technology Propulsion Study and filed July 7, 1997.

DISCLOSURE OF THE INVENTION

Accordingly, it is an object of the invention to provide means and apparatus for converting energy into inertia without the expulsion of mass.

It is a further object of the invention to employ inertia so produced for propulsive lift, for precise vehicle control, and for the operation of vehicles in the atmosphere and in space.

It is another object of the invention to use such inertia in the provision of a force field transmission and or transmitter-receiver system device.

It is yet another object of the invention to meet any or all of the needs or objects summarized above.

These and such other objects of the invention as will become evident from the disclosure below are met by the invention disclosed as defined in the appended claims.

Thrust levitation, or colloquially and simply "levitation" for short, is a new technology that is based on a new understanding of physics that allows standard motor and engine driven torque and mass inertia reaction effects to produce thrust propulsion forces, beam forces, and other unexpected effects. These reaction forces and torque are used in order to counter-act and balance the motor and engine driven torque that is applied to thrust levitation mechanisms and that is converted into thrust for vehicle propulsion. These reaction inertial forces can also be used in order to produce other effects such as inertial field beam forces. Other technologies such as the transmission and reception of inertial beams, which appear to be equivalent to gravity waves, are discussed briefly and have been investigated and briefly tested. Also, techniques are described in this invention disclosure for using the inertial beam forces in order to produce what are described as spatial warp effects. Additionally, momentum balancing mechanisms must be included in the vehicle system designs by using subsystem symmetry and counter rotating subsystems such as momentum balancing wheels.

Thrust levitation reaction force propulsion (driven torque and reaction forces and torque), as described and developed herein, is capable of providing the propulsive forces that are needed in order to lift a vehicle, propel a vehicle in any desired direction, and provide the control forces that are needed in order to maneuver and maintain control of the vehicle (i. e. maneuver and maintain control of the altitude/position, attitude, true course, and speed of a vehicle). Inertial levitation technology, i. e. thrust levitation, is the technology used by a vehicle with a propulsion system that can convert vehicle onboard power into linear inertia, without using the expulsion of mass, as is done by a rocket, or the movement of air or water as is done by aircraft propellers and the screws of marine boats and ships.

Traction and repulsion beam force fields are produced when a thrust levitation propulsion system is powered up and then held in place such that it cannot move. The attractive beam fields and forces that are produced by an inertial field force beam system are similar to or are equivalent to gravitational fields and forces. Repulsive beam fields and forces are similar, but are opposite in effect or sign to those of traction beam fields and forces.

Thrust levitation technology vehicles that implement inertial levitation can range in size from the very small to the very large. A preferred form of the invention and how to make and use the preferred form is presented in this invention disclosure for the application of a light weight class vehicle, light to mid weight class vehicle, and for a heavy weight class vehicle. Also, forms such as an automobile and other forms with significant merit are envisioned and are considered to lie within the scope of the invention.

One aspect of the invention provides a thrust levitation mechanism comprising a main rotor having a center, a periphery, and a rotational axis, the rotor being adapted for rotation about the rotational axis. The rotor describes a rotor plane passing substantially through the center of the rotor and the periphery; and further comprises a plurality of lifting rotor locations disposed about the periphery, there being located at each lifting rotor location at least one driven lifting rotor. Each such lifting rotor has its own rotational axis, which in preferred embodiments of the invention typically lies substantially in the rotor plane of the main rotor and is oriented more or less tangential to the main rotor periphery at the point at which the lifting rotor is located. Simultaneous rotation of the main rotor and the lifting rotors induces in such mechanisms a force directed substantially along the rotational axis of the main rotor. Alternative embodiments comprise a main rotor spinning about a vertical axis having a plurality of radial and outwardly projecting main rotor arms, at the outer end of each of which is a disk spinning about a horizontal axis that is perpendicular to the radial main rotor arm. The disk rotors, which are named lifting disks, have most of their mass on their circumference, in order to ensure maximum rotational inertia at any given rotational speed. Other embodiments including bob rotors and prop rotors are introduced and these or disk rotors may be used as the lifting rotors and may be selectively and dynamically angled out of the main rotor radial and vertical plane that is perpendicular to the horizontal plane of the main rotor to any desired orientation to thereby variably and dynamically induce thrust for horizontal vehicle motion or to otherwise induce thrust asymmetrically. The engine-driven motions of the main rotor and disk rotors produce reaction forces in a vertical direction to lift the rotor propulsion system and the vehicle of which it is a component. Additionally, reaction torque is produced to counter balance the driven torque used to power the various rotors. Controlling pitch and/or skew angles of the bob rotors or the disk rotors control the heading and attitude of the vehicle. Other effects include projected beam forces and associated spatial warp.

Essentially, it can be stated that a thrust levitation system configuration, as illustrated herein, produces a "torque to force transformation" that converts engine driven torque into a reactive force that lifts or thrusts the illustrated vehicle propulsive systems in the chosen direction.

The following summary analyses are presented in order to emphatically and definitively define thrust levitation for the scientist and the engineer. These analyses demonstrate how to carry out thrust levitation system derivations, vehicle designs, and performance analyses.

The volume, mass, and weight of a disk rotor are given by the expressions

$$Vol_d = \int_0^{2\pi} \int_{-x_d}^{x_d} \int_a^b r_d \, dr_d \, dx_d \, da = 2\pi \left( b^2 - a^2 \right) x_d$$

$$M_d = \rho Vol_d \qquad W_d = M_d g$$

respectively, or, in other words, $M_d = \rho 2\pi(b^2 - a^2)x_d$ which is used in the analyses below where $\rho$ is the density of the disk rotor, $W_d$ is the associated force (or "weight") in a 1 $g$ gravitational field that is due to the mass $M_d$. $\rho = SG10^3 \frac{kg}{m^3}$ and the specific gravity, $SG$, is 4.5 for titanium. Additional values are aluminum = 2.713, titanium = 4.5, iron = 7.197, nickel steel = 7.750, stainless steel (18-8)=7.750, steel = 7.806, brass = 8.553, and lead = 11.376.

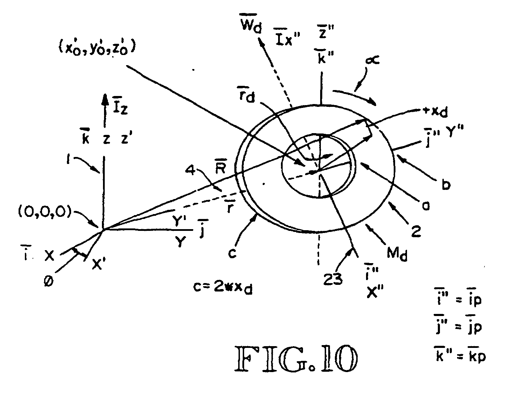

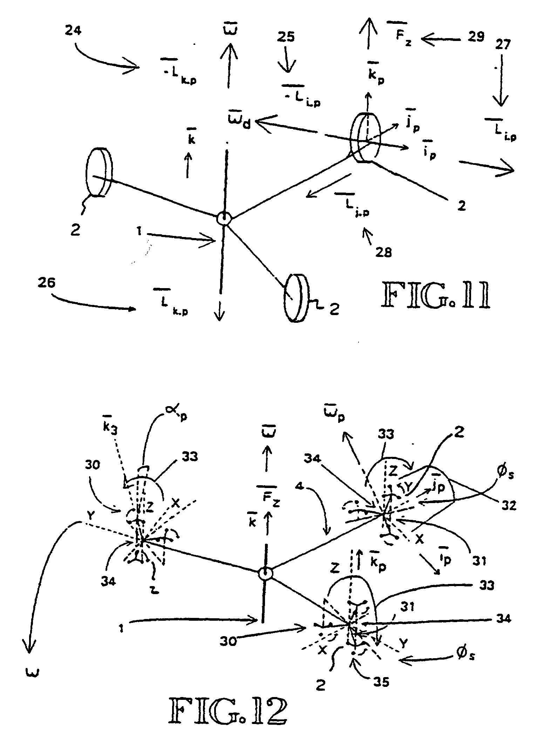

The main rotor angular vector is $\bar{\omega}$ and the disk rotor angular vector is $\bar{\omega}_d$. Using the coordinate systems and notation of **FIG. 10** and **FIG. 12,**

$$\bar{\omega} = \bar{k}_p \omega \qquad \text{and} \qquad \bar{\omega}_d = -\bar{i}_p \omega_d$$

In the main rotor coordinate system, $(\bar{i},\bar{j},\bar{k})$ are the unit vectors for the coordinate axes. The main rotor radius vector $\bar{r}$ is

$$\bar{r} = r \begin{bmatrix} \cos\left(\varphi + \dfrac{\pi}{2}\right) \\ \sin\left(\varphi + \dfrac{\pi}{2}\right) \\ 0 \end{bmatrix}$$

The double prime coordinate system unit vectors are

$$\bar{i}_p = \begin{bmatrix} \cos(\varphi) \\ \sin(\varphi) \\ 0 \end{bmatrix} \quad , \quad \bar{j}_p = \begin{bmatrix} \cos\left(\varphi + \dfrac{\pi}{2}\right) \\ \sin\left(\varphi + \dfrac{\pi}{2}\right) \\ 0 \end{bmatrix} \quad , \quad \bar{k}_p = \begin{bmatrix} 0 \\ 0 \\ 1 \end{bmatrix}$$

The double prime coordinate system unit vector time derivatives are

$$\dot{\bar{i}}_p = \bar{\omega} x \bar{i}_p \qquad \dot{\bar{j}}_p = \bar{\omega} x \bar{j}_p \qquad \dot{\bar{k}}_p = 0$$

$$\dot{\bar{i}}_p = \bar{k}_p \omega x \bar{i}_p \qquad \dot{\bar{j}}_p = \bar{k}_p \omega x \bar{j}_p$$

$$\dot{\bar{i}}_p = \bar{j}_p \omega \qquad \dot{\bar{j}}_p = -\bar{i}_p \omega$$

$\bar{R}$ is the position of the disk rotor differential mass element $dM$ in the main rotor coordinate system (i.e. relative to the origin of the main rotor coordinate system at time $t$).

A very important aspect of the analysis, that greatly simplifies the expressions, is that $\bar{R}$ is expressed in terms of the double prime unit vector directions $(\bar{i}_p, \bar{j}_p, \bar{k}_p)$.

$$\bar{r} = \bar{j}_p \, r$$

$$\bar{r}_d = r_d(\bar{j}_p \sin\alpha + \bar{k}_p \cos\alpha)$$

$$\bar{r}_p = \bar{r}_d + \bar{i}_p \, x_d$$

$$\bar{R} = \bar{r} + \bar{r}_p$$

$$\bar{R} = \bar{i}_p x_d + \bar{j}_p(r + r_d\sin\alpha) + \bar{k}_p r_d\cos\alpha$$

$$R = \sqrt{r^2 + r_d{}^2 + x_d{}^2 + 2rr_d\sin\alpha}$$

$\bar{V}$ is the velocity of the disk rotor differential mass element $dM$ in the main rotor coordinate system, the time derivative of $\bar{R}$ (i.e. relative to the origin of the main rotor coordinate system at time $t$).

$$\bar{V} = -\bar{i}_p\omega(r + r_d\sin\alpha) + \bar{j}_p(\omega x_d + \omega_d r_d\cos\alpha) + \dots$$

$$- \bar{k}_p\omega_d r_d\sin\alpha$$

The acceleration, $\bar{A}$, of the disk rotor differential mass element $dM$ in the main rotor coordinate system (i. e. the time derivative of $\bar{V}$ relative to the origin of the main rotor coordinate system at time $t$) is

$$\bar{A} = \bar{i}_p A_{ip} + \bar{j}_p A_{jp} + \bar{k}_p A_{kp}$$

where

$$A_{ip} = -\left[\left(\frac{d}{dt}\omega\right)(r + r_d\sin\alpha) + 2\omega\omega_d r_d\cos\alpha + \omega^2 x_d\right]$$

$$A_{jp} = -\left[\omega^2(r + r_d\sin\alpha) + \omega_d{}^2 r_d\sin\alpha + \dots \right.$$
$$\left. -\left(\frac{d}{dt}\omega\right)x_d - \left(\frac{d}{dt}\omega_d\right)r_d\cos\alpha\right]$$

$$A_{kp} = -\left[\omega_d{}^2 r_d\cos\alpha + \left(\frac{d}{dt}\omega_d\right)r_d\sin\alpha\right]$$

In the developments below, $-L_{ip}$ and $-L_{kp}$ are the powered torque components applied to a disk rotor by the vehicle engine. $-L_{kp}$ has a plus value in the $\bar{k}_p$ unit vector direction and $-L_{ip}$ has a minus value which is in the $-\bar{i}_p$ unit vector direction.

$L_{jp}$ is the reactive torque experienced, produced, by a disk rotor as a result of the overall motion of the disk rotor in the fixed main rotor coordinate system. When the $L_{jp}$ reactive torque components for all of the disk rotors, configured symmetrically within a single main rotor system, are summed together, then these torque components sum to zero.

$\bar{L}$ is equal to the reactive torque produced by a disk rotor in response to the overall motion of the disk rotor. Also, notice that the motion of a disk rotor is driven and powered by the vehicle engine; specifically, the vehicle engine powers the rotation of the main rotor and simultaneously powers the rotation of each of the disk rotors (i. e. one disk rotor is on each of the main rotor radial arms).

An important and key point is that the driven torque, $-L_{ip}$ and $-L_{kp}$, is precisely balanced by the reactive torque, $L_{ip}$ and $L_{kp}$.

Therefore, the reactive torque is equal to

$$\bar{L} = (\bar{i}_p L_{ip} + \bar{j}_p L_{jp} + \bar{k}_p L_{kp})$$

Additionally, the reactive torque, $\bar{L}$, produced by a disk rotor is equal to the disk rotor density times the volume integral of the cross product of the disk rotor differential mass element position vector $\bar{R}$ with the disk rotor differential mass element acceleration vector $\bar{A}$ in the main rotor coordinate system $(\bar{i},\bar{j},\bar{k})$ and in terms of the double prime coordinate system unit vectors $(\bar{i}_p,\bar{j}_p,\bar{k}_p)$. Notice, the important numerically simplifying detail, that the double prime coordinate system unit vectors $(\bar{i}_p,\bar{j}_p,\bar{k}_p)$ are defined in terms of the $(\bar{i},\bar{j},\bar{k})$ unit vectors. This is a useful representation when using the thrust levitation equations in a numerical analysis program such as Mathcad PLUS 6.0 Professional Edition. Therefore notice that by using the expression above, that $\bar{L}$ can be computed in terms of the unit vectors $(\bar{i},\bar{j},\bar{k})$ in the main rotor coordinate system. All of these details may seem obscure, but they are important elements of the analyses and are being defined here in order to explicitly clarify the significance of the thrust levitation analyses for future reference.

The disk rotor differential mass element is $dM_d$. Therefore

$$d\bar{L} = \bar{R}x\bar{A}dM_d$$

$$d\overline{L} = \begin{bmatrix} dL_{ip} \\ dL_{jp} \\ dL_{kp} \end{bmatrix}$$

$$\begin{bmatrix} dL_{ip} \\ dL_{jp} \\ dL_{kp} \end{bmatrix} = \begin{vmatrix} \bar{i}_p & \bar{j}_p & \bar{k}_p \\ R_{ip} & R_{jp} & R_{kp} \\ A_{ip} & A_{jp} & A_{kp} \end{vmatrix} dM_d$$

$$\begin{bmatrix} dL_{ip} \\ dL_{jp} \\ dL_{kp} \end{bmatrix} = \begin{Bmatrix} \bar{i}_p(R_{jp}A_{kp} - R_{kp}A_{jp}) + \dots \\ \bar{j}_p(R_{kp}A_{ip} - R_{ip}A_{kp}) + \dots \\ \bar{k}_p(R_{ip}A_{jp} - R_{jp}A_{ip}) \end{Bmatrix} dM_d$$

$$
\begin{bmatrix} dL_{ip} \\ dL_{jp} \\ dL_{kp} \end{bmatrix} = \{\bar{i}_p RA_{ip} + \bar{j}_p RA_{jp} + \bar{k}_p RA_{kp}\} dM_d
$$

where the cross product terms are

$$
RA_{ip} = (r + r_d\sin\alpha)A_{kp} - r_d\cos(\alpha)A_{jp}
$$

$$
RA_{jp} = -x_d A_{kp} + r_d\cos(\alpha)A_{ip}
$$

$$
RA_{kp} = x_d A_{jp} - (r + r_d\sin\alpha)A_{ip}
$$

Then, integrating over the disk rotor volume and multiplying by the disk rotor density, ρ, yields the reactive torque components associated with a single disk rotor. Therefore

$$
L_{ip} = 2\rho \int_{\frac{\pi}{2}}^{3\frac{\pi}{2}} \int_{-x_d}^{x_d} \int_a^b RA_{ip}(r,r_d,x_d,\alpha)\, r_d\, dr_d\, dx_d\, d\alpha
$$

$$
L_{jp} = 2\rho \int_{\frac{\pi}{2}}^{3\frac{\pi}{2}} \int_{-x_d}^{x_d} \int_a^b RA_{jp}(r,r_d,x_d,\alpha)\, r_d\, dr_d\, dx_d\, d\alpha
$$

$$
L_{kp} = 2\rho \int_{\frac{\pi}{2}}^{3\frac{\pi}{2}} \int_{-x_d}^{x_d} \int_a^b RA_{kp}(r,r_d,x_d,\alpha)\, r_d\, dr_d\, dx_d\, d\alpha
$$

Therefore, completing the integration yields the following exact symbolic solutions and closed form expressions for the integrals.

$$L_{ip} = \left[ \frac{4}{3\pi} \left( \omega_d{}^2 - \omega^2 \right) r \frac{b^3 - a^3}{b^2 - a^2} - \frac{1}{2} \left( \frac{d}{dt} \omega_d \right) \frac{b^4 - a^4}{b^2 - a^2} \right] M_d$$

$$L_{jp} = \left[ -\frac{\omega}{2} \omega_d \frac{b^4 - a^4}{b^2 - a^2} + \frac{4}{3\pi} \left( \frac{d}{dt} \omega \right) r \frac{b^3 - a^3}{b^2 - a^2} \right] M_d$$

$$L_{kp} = \left[ -\frac{8}{3\pi} \omega \omega_d r \frac{b^3 - a^3}{b^2 - a^2} + \left( \frac{d}{dt} \omega \right) r^2 + \ldots \right.$$

$$\left. + \frac{1}{3} \left( \frac{d}{dt} \omega \right) x_d{}^2 + \frac{1}{4} \left( \frac{d}{dt} \omega \right) \frac{b^4 - a^4}{b^2 - a^2} \right] M_d$$

Where in these expressions the derivatives were assumed to be constant rates in the symbolic integration and therefore must be considered to be constant rates in any subsequent computations that use these expressions.

$\bar{L}$, defined mathematically above, is the lifting disk rotor torque associated with the lifting disk rotor mass $M_d$. Also, the vector components of the differential torque associated with the differential elements of a single disk rotor are defined in the main rotor coordinate system in terms of the unit vector directions $(\bar{i}_p, \bar{j}_p, \bar{k}_p)$.

Vehicle Torque Vector Components. In order to continue the analysis from this point, it is desirable to clarify the physical significance of each of the components of the lifting disk rotor torque vector. First of all, note that when all of the torque components for a complete vehicle system are added together in a vector sum that then they sum to zero and, as a result, the vehicle can maneuver completely free from the constraining effects of net non-zero vehicle torque vectors.

Torque Components $\bar{j}_p$. Specifically, the $\bar{j}_p$ torque components of the disk rotors, $L_{jp}$, that are associated with a main rotor and that are expressed in terms of the disk rotor unit vector $\bar{j}_p$ sum to zero (i.e. within the upper main rotor and separately within the lower main rotor). This is true because of the geometric symmetry of the disk rotor configurations within both the upper and the lower main rotor geometry.

Torque Components $\bar{i}_p$. The $\bar{i}_p$ torque components, $L_{ip}$, are the reactive torque terms that the motion of the disk rotors produce. These reactive torque terms are exactly balanced by the vehicle drive torque terms, $-L_{ip}$, that are applied to the disk rotors, i.e. the disk reactive torque terms, $L_{ip}$, are canceled out by the vehicle engine drive torque terms, $-L_{ip}$, that are applied to the disk rotors. Also, notice that the total drive torque applied to a disk rotor about the disk rotor axis is equal to $-L_{ip}$.

Torque Components $\bar{k}_p$. Since the upper main and lower main rotors are counter rotating rotors, their $L_{kp}$ reactive torque terms sum to zero. Additionally, since the main rotor vehicle engines are configured symmetrically, the upper and lower main rotor engine drive torque terms sum to zero. Specifically, the $\bar{k}_p$ reactive torque components produced by the upper main disk rotors on the upper main rotor, $L_{kp}$, and the torque produced by the upper main rotor arms are exactly canceled out by the $\bar{k}_p$ torque components from the lower main disk rotors on the lower main rotor, $L_{kp}$, and the torque produced by the lower main rotor arms (i.e. the signs are opposite).

Also notice, as mentioned above, that the total drive torque applied to the upper and lower main rotors are equal to $-L_{kp\ upper}$ and $-L_{kp\ lower}$ respectively (which have values with opposite signs and therefore sum to zero). In **FIG. 11**, $-L_{kp} \bar{k}_p$ is a driven torque, with a positive value, about the axis of the main rotor in the upward direction where, $-\bar{L}_{kp} = -\bar{k}_p L_{kp}$, $L_{kp}$ has a negative value, and therefore $-\bar{L}_{kp}$ has a positive value. Also, as illustrated in **FIG. 11**, $-\bar{L}_{kp} = \bar{k}_p |L_{kp}|$.

Angular Inertia (Momentum) Conversion to Linear Inertia (Momentum). Since the outer edges of the disk rotors on both the upper and the lower main rotors rotate such that the outer edges move downward there is a net downward production or movement of linear inertia. This downward generated vehicle engine driven linear inertia (momentum) is produced as a result of the conversion of the vehicle engine drive power to angular inertia (momentum) which is then subsequently converted to downward directed linear inertia (momentum) by the overall driven disk rotor motion which propels the vehicle upward via an equal and oppositely directed inertial reaction effect. Also, the effect of thrust levitation is that downward directed momentum is generated by the overall motion of the disk rotors, and the conservation of momentum law results in the vehicle being driven upward.

Vehicle Control Systems. The vehicle torque terms and angular momenta are all balanced such that they sum to zero and such that they can be used by vehicle control systems in order to maintain positive vehicle control.

Conversion of Reactive Torque to Accelerating Force. The upward force produced by the downward directed vehicle engine driven inertia is produced by the vehicle engine torque components when these torque terms are applied to the disk rotors and the main rotors simultaneously. These applied main rotor and disk rotor engine "driven" torque terms are precisely equal in magnitude and directed oppositely to the $\bar{i}_p$ disk rotor and $\bar{k}_p$ main rotor "reactive" torque components that are represented or described by the reactive torque expressions presented above for a main rotor with a single disk rotor (i.e. by the reactive torque components $L_{ip}$ and $L_{kp}$ for a single disk rotor on a main rotor arm).

Engine Driven Torque Conversion to Balancing Reactive Torque and Net Reactive Accelerating Force. Notice that the upward directed differential force that is produced by a single disk rotor differential mass element is a reactive force that is produced by the associated differential disk rotor reactive torque component d $L_{ip}$ working through the disk rotor differential mass element lever arm length of $r_d$.

Balancing Disk Rotor Radial Reactive Torque Components. As mentioned above, the disk rotor radial reactive torque components, $L_{jp}$, when summed together for all of the vehicle disk rotors, sum to zero (i.e. cancel out and have no constraining effects on the overall vehicle dynamics). Also, these reactive torque terms are small in comparison to $L_{ip}$ and $L_{kp}$ which is important in order to achieve high overall performance efficiency.

Total Single Disk Rotor Upward Directed Reactive Accelerating Force. Theretore, the total upward directed reactive force produced by a single disk rotor is given by the integral expression below where

$$dF_z = 2\rho \frac{RA_{ip}(r,r_d,x_d,\alpha)}{r_d} r_d\, dr_d\, dx_d\, d\alpha$$

where from the prior expressions,

$$RA_{ip}(r,r_d,x_d,\alpha) = (r + r_d\sin\alpha)A_{kp} - r_d\cos(\alpha)A_{jp}$$

and the factor of 2 is used below in order to double the value obtained by performing the $\alpha$ integration from $\frac{\pi}{2}$ to $3\frac{\pi}{2}$ where $\alpha$ is measured from the z" axis in **FIG. 10**.

$dF_z$ is the incremental force produced by the incremental reactive torque associated with the disk rotor incremental mass element $dM_d$ acting through the disk rotor lever arm length of $r_d$.

Physical Interpretation of the Effect that Produces the Upward Directed Reactive Force. Integrating $dF_z$ over the volume of the disk rotor yields the total upward directed reactive force that is produced by and that is associated with the reactive torque. The reactive torque is produced by the overall motion of the disk rotor. This overall disk rotor motion consists of the motion of the disk rotor about the disk rotor axis and the motion of the disk rotor about the axis of the main rotor. In effect, the reactive torque is generated by the sum of the contributions of all of the motions that are applied to a disk rotor. The reactive torque is balanced by the driven torque that is applied to a disk rotor by the main rotor drive torque and by the disk rotor drive torque. The drive torque maintains the steady state motion of the disk rotors and the main rotor in opposition to the reactive torque loads that are applied to the disk rotors.

Also, the reactive torque is associated with a reactive force that is applied to a disk rotor via the disk rotor lever arm length of $r_d$. Notice that the symmetry of the main rotor and disk rotor configurations, being considered, cancel out all of the non vertical forces when the disk rotors are all operating together as a system and at the same disk rotor rates. The disk rotor reactive forces that are applied to the outer perimeter edges of the disk rotors are all directed in the vertical upward direction. The other orthogonal reactive forces that are applied to or that are produced by the disk rotors all sum to zero when the disk rotors are all operating together in a system at the same steady state angular rates.

Another interesting interpretation of the effect that produces the upward directed force is that it is a net upward directed reactive force that results from the production of a net downward directed driven linear inertia. Notice that the angular inertia of each lifting disk rotor is directed or driven in the downward direction at the main rotor arm position that is located near the outer perimeter edge of each lifting disk rotor at a disk rotor effective radius, $r_e$, of

$$r_e = \frac{2b^3 - a^3}{3b^2 - a^2} \qquad \text{when} \qquad \frac{d}{dt}\omega_d = 0$$

Next, perform the symbolic integration in order to obtain the net reactive force in the vertical z direction. Take advantage of the observation that the other orthogonal reactive forces that are produced by the lifting disk rotors all sum to zero for the steady state conditions that are described in the paragraphs above.

Then, the symbolic integration of the reactive force integral below yields the net upward directed lifting force that is produced by a single lifting disk rotor.

$$F_z = 2\rho \int_{\frac{\pi}{2}}^{3\frac{\pi}{2}} \int_{-x_d}^{x_d} \int_a^b RA_{ip}(r, r_d, x_d, \alpha)\, dr_d\, dx_d\, d\alpha$$

$$F_z = \left[ \frac{2}{\pi}\left(\omega_d{}^2 - \omega^2\right)r - \frac{2}{3}\left(\frac{d}{dt}\omega_d\right)\frac{b^3 - a^3}{b^2 - a^2}\right]M_d$$

In this expression, the derivative of $\omega_d$ was assumed to be a constant rate in the symbolic integration; and, therefore the derivative rate must be considered to be a constant rate in any subsequent computations that use this expression.

Therefore,

$$\bar{i}_p L_{ip} = \bar{j}_p r_e x \bar{k}_p F_z \qquad \text{when} \qquad \frac{d}{dt}\omega_d = 0.$$

Notice that the dot product of $\bar{i}_p$ with $\bar{i}_p\,L_{ip}$ has the same value as $L_{ip}$ since $\bar{i}_p$ is a unit vector.

The downward directed angular inertia at the outer main rotor perimeter edge of the disk rotor is greater than the angular inertia that is directed in the upward direction (i. e. directed upward at the main rotor arm position that is located near the inner main rotor perimeter edge of each lifting dish rotor). The result is that the net downward directed inertia produces the upward directed reactive force $F_z$ in the $\bar{k}_p$ direction.

$F_z$ is a positive disk rotor reactive force in the $\bar{k}$ unit vector direction for both the upper and lower main rotor lifting disks. The lower main rotor configuration is the mirror image of the upper main rotor configuration.

Also, notice that it is possible to construct a torque balanced system that uses only one main rotor system that contains a set of symmetric lifting disk rotors, i. e. 3, 4, or more that are positioned 120, 90, and et cetera degrees apart on main rotor arms.

In another aspect, the invention provides a wide variety of vehicles incorporating thrust levitation mechanisms, either singly, in combination, or in multiples. In addition to providing primary propulsion for such vehicles, thrust levitation mechanisms according to the invention may be adapted to serve as reaction propulsion mechanisms for propelling a vehicle in a desired direction, or "steering" or navigating the vehicle, in a role analogous to that now filled by retro-rockets in space craft. And thrust levitation analysis and techniques are extensible to other vehicle types and classes. Additionally, these techniques can be extended to whole new types of systems such as, for example, marine applications and industrial equipment and systems. For example, thrust levitation systems could be used to provide vertical lift capabilities for building construction, for elevator systems, and various maintenance activities. A key attribute of the new break-through concepts described herein are that they use vehicle onboard engine power in order to produce standard engine torque which is then converted into vehicle thrusting force without employing marine boat and marine ship screws, aircraft propellers, jet thrust, or rocket thrust. Such power may be provided by any conventional means, such as internal combustion engines, steam or gas turbines, electric motors, nuclear reactors, et cetera. Another key aspect of the approach of thrust levitation is that, as a motive power source, it appears to be highly efficient, possibly more than 90 percent efficient (i.e. in terms of the utilization of the available engine power).

In another aspect, the invention provides inertial field force beam transmission and/or transmitter-receiver systems incorporating one or more of such thrust levitation mechanism, the mechanism being held substantially in place and driven by power applied to the main rotor and the lift rotors so that a traction force beam is induced in a direction substantially along the rotational axis of the main rotor and a repulsion force beam is induced in substantially the opposite direction. Traction and repulsion beam force fields are produced when a thrust levitation propulsion system is powered up and then held in place such that it cannot move. The attractive beam fields and forces that are produced by an inertial field force beam system are similar or are equivalent to gravitational fields and forces. Repulsive beam fields and forces are similar, but are opposite in effect or sign to those of traction beam fields and forces.

Further, in alternative embodiments of this invention it is anticipated that when the amplitude and/or the carrier frequency of traction and repulsion beam force fields are controlled and varied that then new physical phenomena having useful applications will be observed and will be available to the system designer. It is envisioned that when such controlled traction and repulsion beam force fields are applied to and transmitted into and through various items and materials such as man made structures, natural structures, and living things; that then new, surprising, and useful phenomena and effects will be observed. For example, according to this aspect of the invention, new application inertial beam field systems can be made that are associated with varied, modulated, and et cetera inertial field carrier or signal frequencies from low frequencies such the Hertzian range to high frequencies such as the Mega-Hertz range and higher.

BRIEF DESCRIPTION OF THE DRAWINGS

**FIG. 1a** is a schematic plan view of a preferred embodiment of a thrust levitation mechanism according to the teachings of this disclosure. **FIG. 1b** is a schematic sectional side view of a preferred embodiment of a thrust levitation mechanism according to the teachings of this disclosure, taken along view 1b-1b of **FIG. 1a**.

**FIG. 2** is a top or plan view of a single shaft thrust levitation system according to the invention.

**FIG. 3** is a side elevation view of the apparatus shown in **FIG. 2**.

**FIG. 4, FIG. 5,** and **FIG. 6** are conceptual illustrations for lifting disk drive and control units that use drive belt and gear designs. **FIG. 4** is a conceptual perspective view of one form of a lifting disk and its drive mechanism that is used as a part of the apparatus shown in **FIG. 2. FIG. 5** is a first alternative structure for the lifting disk rotor and drive shown in **FIG. 4. FIG. 6** is another embodiment of the lifting disk rotor and drive of **FIG. 4**.

**FIG. 7** is a schematic side elevation view of a thrust levitation transport vehicle according to the invention.

**FIG. 8** is a schematic top planar view of the thrust levitation transport vehicle illustrated in **FIG. 7**.

**FIG. 9** is a schematic of the main rotor and lifting disk rotor geometry for a dual main rotor embodiment of the invention.

**FIG. 10** is a schematic for the main rotor and lifting disk rotor force geometry and coordinate systems that are used in order to derive the thrust levitation system characterization equations and to develop a one dimensional vertical motion analysis for a thrust levitation vehicle.

**FIG. 11** is an illustration that depicts how the thrust levitation vertical lifting force, $\bar{F}_z$, is produced for near terrestrial use, atmospheric use, and space use.

**FIG. 12** is an illustration that depicts the concept of and configurations for using prop rotors and bob rotors in thrust levitation propulsion systems that employ bob masses on the bob rotors.

**FIG. 13** is a chart that compares the power loading, vehicle gross weight divided by maximum power, for various vehicles to the performance of a thrust levitation vehicle.

**FIG. 14** is a chart that compares the launch efficiency of various vehicles used to reach low earth orbit, in terms of mass fraction, to the performance of a thrust levitation vehicle.

BEST MODE OF CARRYING OUT THE INVENTION

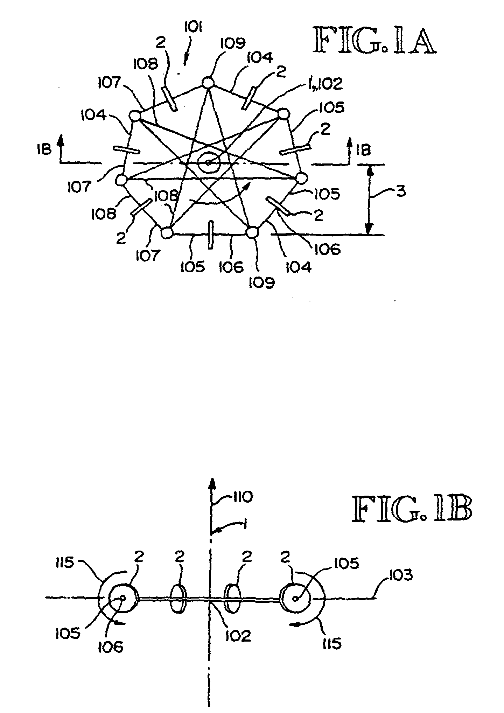

Referring now to the drawings, **FIG. 1a** is a schematic plan view of a preferred embodiment of a thrust levitation mechanism according to the teachings of this disclosure. **FIG. 1b** is a schematic sectional side view of a preferred embodiment of a thrust levitation mechanism according to the teachings of this disclosure, taken along view 1b-1b of **FIG. 1a**. The mechanism is depicted in those Figures in a star wheel heptagon main rotor configuration. The mechanism comprises main rotor 101 and lifting disk rotors 2, and describes main rotor radius 3. Main rotor 101 rotates about rotational axis 1 passing through center 102 and comprises periphery 104 which with center 102 describes rotor plane 103 (best seen in **FIG. 1b**). Lifting disk rotors 2 are disposed about periphery 104 at lifting rotor locations 105 and 106, each lifting rotor having a rotational axis lying within rotor plane 103 and oriented tangent to periphery 104. As herein described, rotation of main rotor 101 simultaneously with rotation of the lifting rotors produces a levitation force directed along main rotor rotational axis 1. When the main rotor is rotated in the sense of arrow 111 and lifting rotors 2 are rotated in the sense of arrows 115, a force is generated in the direction of arrow 110; when the rotors are rotated in the opposite sense, a force is generated in the direction opposite of arrow 110.

Levitation mechanisms according to this aspect of the invention may be made in any number of ways which will occur to mechanism designers of ordinary skill, once they have been armed with the disclosure of the invention. In preferred embodiments of the invention in which the main rotor is comprised of a "star" wheel, such as that shown in **FIG. 1a** and **FIG. 1b**, the periphery of the star wheel comprises a plurality of joined substantially straight side sections 107 interconnected by means of support sections 108 attached to side section joints 109 substantially opposite across the wheel from said side sections, said support sections passing close to but not through the rotational axis of the main rotor, and wherein each side section comprises a lifting rotor location. Such star wheel configurations may be assembled in any fashion and of any materials of satisfactory strength, durability, and corrosion resistance, many of which will occur with reasonable facility to the skilled designer. Power may be provided to the rotors through any means sufficient to comport with the disclosure of the invention, many of which are disclosed herein. For example, a conventional mechanical power train may be adapted to drive the main rotor, which may be connected to the lifting rotors by means of drive belts, chains, shafts or axles.

An alternative embodiment of this aspect of the invention involves the use of an electronic implementation of thrust levitation that converts electrical power directly into vehicle thrust by using theoretical techniques that employ particle acceleration and/or possibly even super conductivity. One embodiment uses toroidal coils that are rotated mechanically about the main axis of the torrid. It is anticipated that such electronic system implementations, possibly using super conductivity, may be capable of receiving and transmitting gravity wave signals. Typical electronic thrust levitation system approaches offer the advantage of simpler designs than are allowed by mechanical approaches. One electronic implementation 1) employs electronic crystalline structures in place of the lifting disks on the main rotor of a thrust levitation system and 2) involves the crystal vibratory rotational mode motion induced and powered by an electric potential applied to crystal structures.

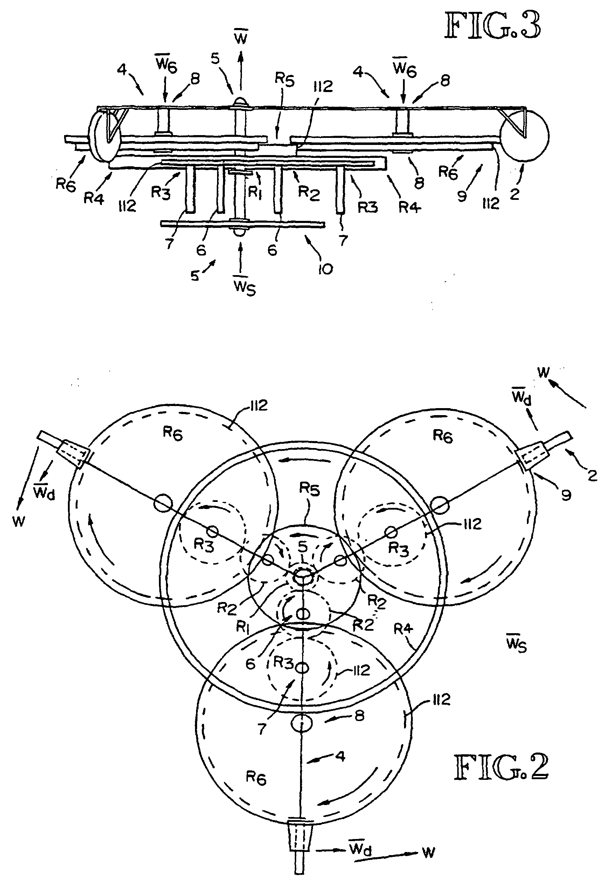

**FIG. 2** is a top or plan view of a single shaft thrust levitation system comprising a number of intermediate rotor wheels, or "ratio gears", $R_2$ to $R_4$ and $R_6$. In the preferred embodiment shown, rotors $R_2$ to $R_4$ and $R_6$ are driven by frictional contact between adjacent wheels and circumferential drive surfaces 112. Main rotor drive shaft 5 rotates counterclockwise at $\bar{\omega}_s$, and drives disk rotors 2 by means of medium gear ratio gears $R_1$ to $R_6$. The disk rotors 2 which are exaggerated in size are driven by the drive and control units, DCUs, 9 at angular rates $\bar{\omega}_d$. The DCU 9 uses rotor $R_6$ to power the lifting disk 2. The rotor shafts 6 and 7 are attached to and fixed to the frame of the vehicle in which this thrust levitation system is installed, which in general is characteristic of a single drive shaft thrust levitation system design. Also, referring to **FIG. 2,** shaft 6 is below rotor $R_5$ and shaft 7 is below rotor $R_6$. Rotor $R_1$ is attached to the drive shaft 5. Rotors $R_4$ and $R_5$ are connected together and rotate together. Rotor $R_4$ is positioned below $R_6$. The main rotor is driven by $R_5$ by applying torque to $R_6$ in the counterclockwise direction. The main rotor, driven by $R_5$, is rotating in the counterclockwise direction as indicated by $\omega$, where $\bar{\omega}$ is directed upward as shown in **FIG. 3**. Rotor shaft 8, as shown in **FIG. 3,** is attached to the main rotor arm 4, i. e. is fixed to the main rotor arm 4, and rotor $R_6$ rotates freely on shaft 8 and is driven by rotor $R_5$. Such multi-wheel embodiments provide all of the advantages of the single main rotor embodiment discussed above. In addition, such multi-wheel designs offer the advantages of improved control of overall inertia and/or momentum levels and output for thrust levitation mechanisms, and therefore the forces produced by such mechanisms. Multi-wheel embodiments are regarded as falling within the scope of the invention like any other.

**FIG. 3** is a side elevation view of the apparatus shown in **FIG. 2**. Shafts 6 and 7 are attached and fixed to the frame of the vehicle in which this thrust levitation system is installed. Fly wheel and momentum balancing rotor 10 is attached to the engine drive shaft 5. Fly wheel and momentum balancing rotor 10 serves to improve steady-state performance of the system in the manner for which fly wheels are generally utilized. Main rotor 4 rotates at the rate $\bar{\omega}$ on the drive shaft 5 which is being driven by the engine at the rate $\bar{\omega}_s$. Also the rotors $R_6$ rotate at the rate of $\bar{\omega}_6$ on shaft 8 and is driven by rotor $R_5$. The DCU 9 uses rotor $R_6$ to power the lifting disk 2. Thus main rotor 4 acts in the same capacity as main rotor 1 of **FIG. 1a** and **FIG. 1b**, although some of its inertial contributions are shared by rotors $R_1$ through $R_6$.

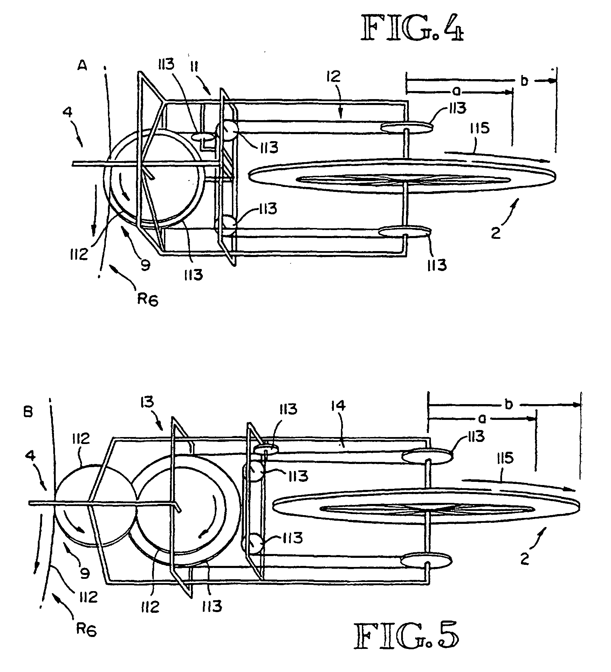

**FIG. 4, FIG. 5,** and **FIG. 6** are conceptual illustrations for alternative embodiments of lifting disk drive and control units, DCUs, that use drive belt and gear designs. Specifically, **FIG. 4** is a conceptual perspective view of one form of a lifting disk and its drive mechanism that is used as a part of the apparatus shown in **FIG. 2**. This DCU configuration design concept A illustrates a top down view for a single drive shaft 5 thrust levitation system that consists of a main rotor drive shaft 5 rotating counterclockwise at $\bar{\omega}_s$, as shown in **FIG. 3,** and that is driving the disk rotors 2 by using medium gear ratio gears $R_1$ to $R_6$. The disk rotors 2 are driven by the drive and control units, DCUs, 9 at angular rate $\bar{\omega}_d$, as shown in **FIG. 2**. The DCU 9 uses rotor $R_6$ to power the lifting disk 2. The main rotor arm 4 is attached to the DCU structure 11 that supports and holds the belts 12 that drive the disk rotor 2 by means of wheels 113.

**FIG. 5** is an alternative structure for the lifting disk rotor and drive unit, DCU configuration design concept B. The DCU structure 13 supports and holds the belts 14 that drive the disk rotor 2.

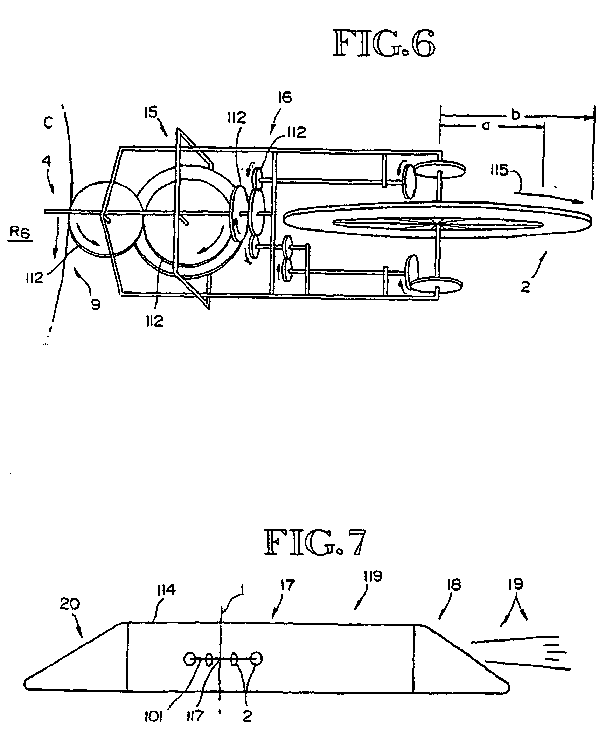

**FIG. 6** shows yet another embodiment of the lifting disk rotor and drive unit, DCU configuration design concept C. The DCU structure 15 supports and holds the drive gears 16 that drive the disk rotor 2 by means of frictional contact between the rotors and circumferential drive surfaces 112. In any of the above described embodiments disk rotors 2 could be driven through any acceptable means, such as by gears, in addition to the belt and friction-contact embodiments shown.

The following design parameter values illustrate and describe the mechanical configuration for a thrust levitation system that is driven by a single drive shaft.

| | |
|---|---|
| Drive shaft gear - | $R_1$= 1.00 |
| Primary rpm reduction gear - | $R_2$= 1.46 |
| Secondary rpm reduction gear- | $R_3$= 2.18 |
| Size reduction gear- | $R_4$= 8.33 |
| Central drive gear - | $R_5$ = 3.37 |
| Drive rpm redudion gear - | $R_6$= 6.13 |
| DCU drive gear - | $R_{6\ outer}$= 6.67 |
| Lifting disk rotor - Thickness = $2 \cdot x_d$ | Typically $x_d$ is 2 % of b |
| Lifting disk rotor - Inner radius = a | Typically a is 92 % to 94 % of b |
| Lifting disk rotor - Outer radius = b | Typically b is 4 inches to 12 inches |

Variations of the design presented above could include the elimination of the rotor $R_2$ which would simplify the complexity of the design and which would at the same time cause the main rotor to rotate in a clockwise direction, L e. change the ditrection of the vector $\bar{\omega}$ by 180 degrees.

When a thrust levitation system is used in order to produce inertial field force beams, then such a system is referred to as an inertial field force beam system, traction beam system, or repulsion beam system. Extensions of such systems include impulse force beam systems, projectile firing systems that propel a projectile with an impulse force beam, sensory systems that measure the mass of small objects remotely by engaging the small object with a force beam, pumps that propel liquids with force beams, and et cetera. A useful application would be to over-fly the ground at low altitude with a wide area coverage and powerful repulsion beam directed at the ground in order to set off land mines and thereby clear many of the mines from a mine field from a safe distance above in the air.

If the thrust levitation system described herein is oriented such that the axis is directed towards the left, the system is held in place, and the rotor systems are powered up, then traction and repulsion beams are simultaneously directed towards the left and right respectively. The inertial field force beam to the left of this inertial field force beam system is a traction beam. The inertial field force beam to the right of this inertial field force beam system is a repulsion beam. The inertial field force beam attributes such as focal point, beam width, field intensity, and et cetera can be controlled by varying the geometry of the inertial field force beam system rotor mechanisms. Such inertial field force beam systems can be analyzed by using approaches that are similar to the analysis techniques that are presented herein and which are well within the ability of the ordinary designer of inertial systems once he or she has been given this disclosure. Force beam mechanisms that are considered to be equivalent and extensions of the system features described herein include variable geometry disk rotors and moving chain disk rotor systems that allow the beam attributes mentioned above to be controlled and changed. The attractive beam fields and forces that are produced by an inertial field force beam system are similar to or are equivalent to gravitational fields and forces. Repullsive beam fields and forces are similar, but are opposite in effect or sign to those of traction beam fields and forces.

A centrally directed traction beam field is essentially equivalent to a gravitational cylindrical potential well that is centered on the axis of a cylinder. This equivalent potential well field could be defined mathematically as and in terms of an equivalent gravitational mass that is located along the central axis of the cylinder.

One of ordinary skill in the art will readily discern how to extend the thrust levitation system analyses and design approaches presented in this invention disclosure to new system configurations. For example, it is obvious how to merely apply the same mathematical and design technologies demonstrated in this invention disclosure to new system geometry configurations, i. e. new vehicle designs, and implement sophisticated vehicle design capabilities on high performance computer systems.

A thrust levitation automobile vehicle class could be developed that would be able to operate just a few feet above a standard road. By properly extending the thrust levitation technology presented herein, a thrust levitation automobile could be designed that would be able to operate safely just above existing roads. Such a thrust levitation automobile would have positive control even in high cross wind conditions and would be able to operate in amongst heavy rush hour traffic on all city streets, interstate highways, and up and down the steepest mountainous roads and highways.

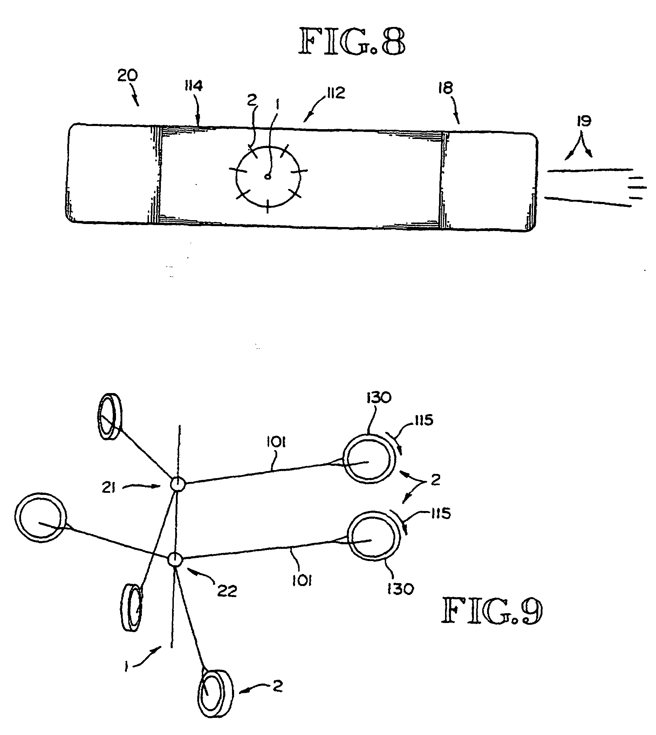

**FIG. 7** is a schematic side elevation view of a thrust levitation transport vehicle according to the invention. Vehicle 119 has forward shining lights and sensors 19 and mid-craft articulated thrust levitation mechanism 117, as illustrated, and large red flashing beacon 17 with about a 1 second period, i. e. repetition rate. The forward and aft ends of the craft have identical large front and aft facing, including side facing, viewing surfaces 18 and 20, as components of a vehicle external viewing system for an electrically enclosed metal vehicle hull, which includes high power photo multiplier driven viewing sensor aperture surfaces that are exterior to and are on the outside surface of the vehicle metal pressurization hull. Because of the high power photo multiplier sensor surfaces, these surface areas emit a low intensity level white glow that is visible at night as is illustrated in **FIG. 7** and **FIG. 8**. In preferred embodiments one or more thrust levitation mechanisms 117 are mounted on or inside the vehicle in any suitable fashion, many of which will at once be apparent to the mechanical designer of ordinary skill once he or she has been armed with the disclosure of the invention. For example, a single sufficiently large thrust levitation mechanism may be gimbal- or otherwise universally- mounted inside vehicle center section 114, near the vehicle's center of mass, so that it may provide thrust in the upward, forward, or other desired directions. Similarly, one or more such mechanisms may be disposed for upward thrust, with other dedicated thrust levitation mechanisms disposed for forward thrust and steering or navigation.

Also, the concept is that since each elemental surface area on the viewing sensor apertures provide a "perspective field of view" of the outside scene; and when all of this viewing sensor imagery is displayed on mapped, L e. one-to-one viewing screen elements, on the viewing screens inside of the craft, then the result is that true three-dimensional views with both horizontal and vertical effects are displayed inside the craft as if windows were being used in order to view the outside scenes. Zoom magnification can be produced by changing the elemental sensor magnification/field-of-view settings and the sensor-to-viewing screen mappings. An interesting design related detaill is that if a person were to close one eye and look through one elemental region on the inside viewing screen and move his head from the left to the right while looking through this single elemental viewing screen element, then he would observe that the "perspective field of view" of the outside scene would change from the right to the left as if he were peering through a hole in a wall. Also, the mesh diffraction effects caused by the boundaries between the separate individual elemental screen surface areas, like the effects of small imperfections on a glass window, are eliminated when either the human eye or a camera lens is focused on the outside scene.

**FIG. 8** is a schematic top planar view of the thrust levitation transport vehicle illustrated in **FIG. 7**. A short list of the predicted performance attributes of the thrust levitation vehicle illustrated in **FIG. 7** and **FIG. 8** are described below. Also, the thrust levitation vehicle performance capabilities that are presented in this invention disclosure are predicted by using mathematical physics and engineering design analyses included within or otherwise within the ability of vehicle designers of ordinary skill, once armed with this disclosure.

A representative vehicle case design is illustrated by the set of parameter design values that are presented below and that were computed by using the thrust levitation design equations:

$F_z$ = 2776.3 lbf is the accelerating force in units of pounds of force, in the $\bar{k}$ unit vector direction, due to a single main rotor lifting disk.

$\omega$ = 15 rpm is the angular rate of the main rotor, upper is plus and lower is minus.

$\omega_d$ = 250 rpm is the angular rate of the disk rotor, upper and lower are both plus.

$$\left(\frac{d}{dt}\omega_d\right) = 0 \text{ rpm/sec}$$

is the sngular rate of change of the rotational rate $\omega_d$ of the disk rotor.

$$\left(\frac{d}{dt}\omega\right) = 0 \text{ rpm/sec}$$

is the angular rate of change of the rotational rate $\omega$ of the main rotor.

$r$ = 50 ft is the main rotor arm radius that supports the disk rotor axis.

$b$ = 12 inches is the disk rotor outer radius.

$a$ = 11.28 inches is the disk rotor inner radius.

$r_e$ = 11.644 inches is the disk rotor effective radius.

$M_d$ = 4.11 lb is the mass of a titanium disk rotor.

$W_d$ = 4.11 lbf is the weight of the disk rotor.

$2x_d$ = 0.48 inches is the width of the disk rotor.

$Vol_d$ = 25.276 inches$^3$ is the volume of the disk rotor.

The following vector component terms define the reactive torque associated with a single lifting disk rotor defined in the main rotor coordinate system and expressed in terms of the double prime unit vector directions $(\bar{\bar{i}}_p, \bar{\bar{j}}_p, \bar{\bar{k}}_p)$ that are illustrated in **FIG. 10** and **FIG. 11**.

$$L_{ip} = 2693.9 \text{ ft lbf}$$

$$L_{jp} = -4.9 \text{ ft lbf}$$

$$L_{kp} = -324.4 \text{ ft lbf}$$

Notice that the vehicle drive torque,$-L_{ip}$ and $-L_{kp}$, balances the reactive torque terms that are listed above when the vehicle thrust levitation system is operating in a steady state condition. The significance of the reactive torque term $L_{jp}$ is discussed above in the mathematical and concepts section.

**FIG. 9** illustrates a perspective schematic view for a dual main rotor configuration and the lifting disk rotor geometry consisting of counter rotating upper and lower main rotors with rotor hubs 21 and 22, an axis of rotation 1 for the main rotors 101, and six lifting disk rotors 2. The lifting disks all rotate such that their perimeter edges 130 are all rotating in the downward direction. An interesting design detail that isn't obvious at first glance is that, for example if the top rotor is flipped over vertically, then since the two main rotors are counter rotating, the geometry of the upper and lower main rotors and the associated lifting disk rotors are mirror images of each other. Among the advantages provided by dual-main rotor embodiments is that the relative magnitude of levitation, lifting, tractor, or repulsive forces induced by the system may be very finely controlled. For example, rotation of the main rotors 101 in opposite directions and at varying speeds can be used to control overall magnitudes and senses of such forces by vectorial summing the resultant forces induced by each rotor.

**FIG. 10** is a schematic for the main rotor and lifting disk rotor force geometry and coordinate systems that are used in order to derive the thrust levitation system characterization equations and to develop a one dimensional vertical motion analysis for a thrust levitation vehicle, the lifting disk rotor 2 with mass $M_d$ rotates at $\bar{\omega}_d$ about the axis 23 which is x" and in the $-\bar{i}_p$ right hand convention axis direction as the disk rotor 2 is rotated on the main rotor arm 4 with length $\bar{r}$ about the main rotor axis 1 in the counterclockwise direction $\bar{\omega}$. The disk rotor 2 is rotating through the angle $\alpha$ which is the zenith angle measured from the axis z", and in summary this schematic is described in detail herein.

**FIG. 11** is an illustration of a vertical force mechanical design propulsion configuration that depicts how the thrust levitation vertical lifting force, $\bar{F}_z$, 29 is produced for near terrestrial use, atmospheric use, and space use where the lifting disk rotor 2 rotates at the rate $\bar{\omega}_d$ about $-\bar{i}_p$ and at the rate $\bar{\omega}$ about axis 1 where the driven main rotor torque per disk rotor is 24, the driven disk rotor torque is 25, the reactive main rotor torque per disk rotor is 26, the reactive disk rotor torque is 27, and the reactive disk rotor torque along the main rotor arm as illustrated in the $-\bar{j}_p$ direction is 28.

**FIG. 12** depicts an alternative embodiment of the invention using prop rotors 31 and bob rotors 30 in thrust levitation propulsion systems that employ bob masses 35 on the bob rotors 30. The main rotor arms 4 are driven counterclockwise on the main rotor axis 1 at the rate $\bar{\omega}$, the prop rotor is driven at the rate $\bar{\omega}_p$ about the torque drive point 34 in the angular direction 33, and the bob rotors 30 rotate in response. The combination 32 of bob rotors on a prop rotor on a main rotor arm consist of three or more such units on the main rotor. The pitch angle $\alpha_p$, a rotational

angular offset about the prop rotor arms in the $\bar{k}_3$ unit vector directions, and the skew angles $\phi_s$ in the xy plane are used in order to produce reactive torque to drive the free wheeling main rotor, provide horizontal propulsion reactive forces, vertical reactive forces $\bar{F}_z$, and attitude control reactive forces.

The orientation angle, $\alpha_p$, in **FIG. 11** and **FIG. 12** of a disk rotor, about a main rotor arm, is referred to as the pitch angle of a disk rotor or a bob rotor. The pitch angle of a disk rotor can be used in order to nearly instantaneously control or modulate the vertical reactive force that is produced by a lifting disk rotor as it is swept by a main rotor arm about the vertical axis of the main rotor. The orientation angle, $\phi_s$, in **FIG. 12** of a disk rotor about the vertical axis through the center of a disk rotor, (for example, the z" axis in **FIG. 10**) is referred to as the skew angle of a disk rotor. The heading of a vehicle can be controlled by using horizontal reactive forces that can be produced in order to propel a vehicle in a forward direction or in some other desired heading direction, $H_d$. For example, the skew angles, $\phi_s$, of the disk rotors in a main rotor system can be used in order to control the direction of the applied vehicle horizontal reactive forces such that these forces are applied in the direction of the vehicle desired heading. The direction of the horizontal reactive force, due to a particular disk rotor, is controlled by dynamically varying the disk rotor skew angle as the associated main rotor arm is rotated about the axis of the main rotor, i. e. as a function of the main rotor arm angular position, $\phi$. The skew angle, $\phi_s$, for a disk rotor is defined as $\phi_s = -\phi_{s\_Max}COS(Sway_s \cdot \phi - H_d)$ where, when $Sway_s$ = **1** then $H_d$ is the desired vehicle heading direction for the horizontal reactive force that is propelling the vehicle in the horizontal direction. $\phi_{s\_Max}$ is the maximum disk rotor skew angle through which the disk rotor is being dynamically and cyclically moved back and forth about a vertical axis through the disk rotor as the associated main rotor arm rotates about the main rotor axis, as is illustrated in **FIG. 11** and **FIG. 12**.

$Sway_s$ is a rate factor that, when it is set to a value of less than 1, results in a horizontal reactive force being applied such that it sweeps around the perimeter edge of the vehicle in a clockwise direction as a function of the main rotor arm angle $\phi$. When the value of $Sway_s$ is increased above a value of 1, then a horizontal reactive force is swept around the perimeter edge of the vehicle in a counter clockwise direction. Also, for example, the sweep rate of this horizontal reactive force decreases gradually as $Sway_s$ is gradually decreased below 1.

Inertial field force beams are produced by the thrust levitation system described herein and illustrated in **FIG. 10** when this thrust levitation system is held in place and driven power is applied to the main rotor and the disk rotors.

Consideration of the dynamic analysis presented herein will indicate that allowing the pitch angle of the disk or lifting rotors to vary from their nominal position tangent to the main rotor periphery will yield a reactive component of torque about the rotational axis of the main rotor which will drive the main rotor, thus producing very quick and reliable control of the force induced by the thrust levitation system. Typical control reaction times are very low in comparison with the rotational period of the main rotor. Thus many preferred embodiments of the invention comprise lifting rotors as herein described, wherein the rotational axis of at least one of said disk rotors is oriented substantially tangent to the main rotor periphery and offset from tying within the rotor plane of the main rotor by a controllable/selectable pitch angle to yield a reactive component of torque about the rotational axis of the main rotor to drive said main rotor.

Extension of the principles just described to a further dimension allows the realization of that aspect of the invention which provides a reaction propulsion mechanism for propelling a vehicle in a desired direction, comprising a fixed or anchored thrust levitation system according to the above, but in which at least one driven lifting rotor located at each lifting rotor location has a rotational axis lying substantially in the rotor plane of said main rotor and oriented at a selectively variable skew angle within said rotor plane, whereby the vehicle may be propelled in any desired direction in multiple dimensions. As is apparent through consideration of the analysis herein, simultaneous, synchronous, or cyclic rotation of the lifting rotors through both skew and pitch angles provides great flexibility in the navigation of vessels incorporating systems according to the invention. As will appear, for example, manipulation of the skew angles may be used to induce horizontal reactions which can either steer the vehicle or cause an induced force to be swept around the vehicle in either a clockwise or a counter clockwise direction. Couplings, drivings, power transmissions, and the like to facilitate single or multiple dimension rotation of lining rotors (that is, to allow controlled manipulation of rotor skew and pitch angles) are relatively well known in the mechanical arts, and their provision will not trouble the skilled designer once he or she has become familiar with this disclosure.

Prop and bob rotors can be substituted for or replace the disk rotors used in thrust levitation systems as illustrated in **FIG. 12**. A bob rotor comprises a rotor hub with short rotor arms that each support a bob mass. The advantage of bob rotor systems is that they can be configured such that the bob rotors are free wheeling and are automatically and efficiently powered by reactive torque. It is also possible to use free wheeling main rotors with free wheeling bob rotors that are associated with powered prop rotors. Thrust levitation systems that are implemented with bob rotor configurations can be designed such that they implement the pitch and skew angle control mechanisms that are described herein and below. Although bob rotor mechanisms are difficult to analyze and are only described in this invention disclosure and patent application by using descriptive design discussions that characterize their performance, bob rotor configurations are considered to be geometric configuration extensions of the concepts that are analyzed herein and, therefore prop and bob rotor mechanisms are being claimed as part of this invention.

It is to be understood that lifting rotors according to the invention may be of any configuration that will produce or approximate the dynamic results described herein and perform their purpose effectively. Designers of dynamic systems having ordinary skill in their art will find that they are not troubled by the selection of suitable main rotor, intermediate rotor, and lifting rotor configurations, materials, and drives for particular applications once the designers are armed with the disclosure of the invention.

Notice that a bob rotor axis is always *perpendicular* to the arm of the prop rotor to which it is attached and about which it swivels. A bob rotor swivels about the prop rotor arm in accordance with and to the assigned or commanded pitch angle position (through an angular range of, for example, 180 to 360 degrees). The pitch angle, $\alpha_p$, is or can typically be set at about 45 degrees.

The vehicle rotor system geometry illustrated in **FIG. 12**, in summary, consists of a main rotor that is free wheeling, is driven by reactive torque, and consists of three or more main rotor arms. Each of these main rotor arms has an attached prop rotor to which vehicle power is applied in the form of driven torque. The prop rotor on a main rotor arm consists of three prop rotor arms which each have attached bob rotor axes. These bob rotor axes are all positioned at the same angular position with respect to the prop rotor arms and can all be re-positioned simultaneously on a particular prop rotor such that they are all oriented at another angular position. This angular position is referred to as either the pitch angle, the prop rotor pitch angle, and/or the bob rotor axis pitch angle. Each bob rotor axis contains a free wheeling bob rotor that is driven by reactive torque and that has two or more bob rotor arms. The bob rotors that are illustrated in **FIG. 12** each have three rotor arms. Power is applied to the system by using power driven applied torque in order to drive the rotation of the prop rotors.

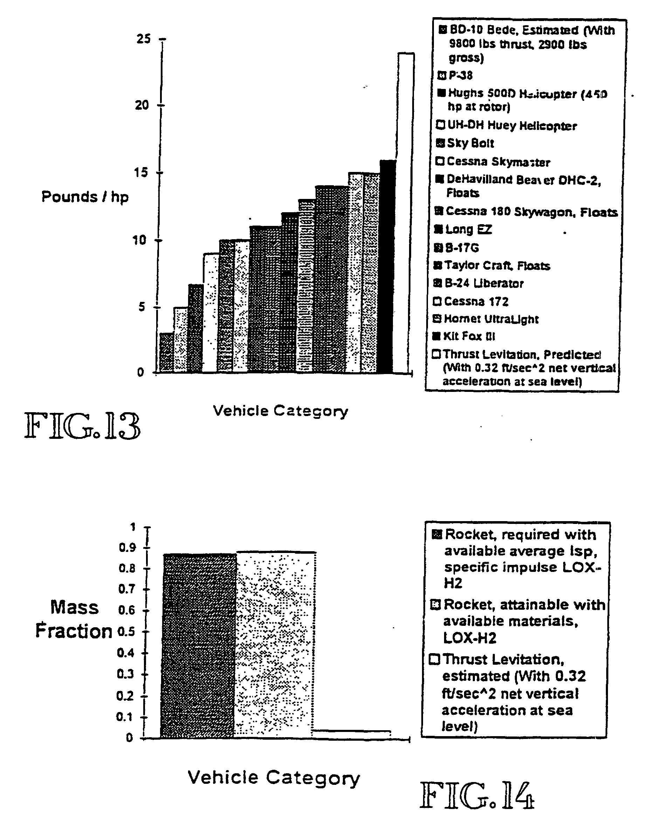

**FIG. 13** is a chart that compares the power loading, vehicle gross weight divided by maximum power, for various vehicles to the performance of a thrust levetation vehicle.

**FIG. 14** is a chart that compares the launch efficiency of various vehicles used to reach low earth orbit, in terms of mass fraction, to the performance of a thrust levitation vehicle.

As has been indicated, the thrust levitation mechanism aspect of the invention may also be used to transmit inertial field force beams, or to draw such beams into the mechanism; that is, to produce traction or repulsion force beams. To do so it is only necessary to mount a thrust levitation mechanism according to the invention in a fixed position and to operate it according to the disclosure by applying power to the main rotor and the lift rotors; depending upon the orientation of the mechanism a traction or repulsion beam will be induced along the main rotor axis. Manipulation of the pitch and skew angles of the lifting rotors in the manner described allows the beam to be swept from side to side and radially around the mechanism.

The predicted effect for the concept and phenomena of spatial warp is that a three-dimensional inner volume increase for a structure can be produced by applying a traction beam field inside of an enclosed volume. Spatial warp can make more usable space available inside of a craft than appears to be available based on the outside dimensions of the craft. The effect is that traction beam energy can be expended in order to increase the usable and available space inside of a small craft. It is postulated by the inventors that traction and repulsion beams can distort the normal three dimensional space inside of a metallic structure.

The magnitude of the spacial warp effect can be quantised and predicted for the observed increase in the volume of a cylinder, as represented by the measured increase in the radius of the cylinder, i. e. the observed increase in the value of r. In order to predict and quantify the increase in the value of r, use the fundamental concepts of general relativity and the associated equations that predict the delay period that radio signals experience when they are transmitted out of a gravitational well or, equivalently, when they are transmitted away from a central gravitational mass. Then assume that this delay is caused by an increase in the radial path distance, r, that the radio signals must travel when they are transmitted out of the effective gravitational field which can be due to a gravitational mass located, for example, along the axis of a cylinder or due to an equivalent traction beam that is producing a radial gravitational field in cylindrical coordinates.

The interior dimensions of a space ship that are available for use by the onboard crew may possibly be increased beyond the exterior volume that is seemly displaced by the ship. It is anticipated that it is possible to predict mathematically that the interior dimensions of a ship can be increased beyond the volume displaced by the ship by up to a factor of 10 times the size of the normal volume of the ship. The proposed approach involves employing a gravitational field space-time distortion generation system. The physics employed involve the supposition that it is possible to distort space-time within the small confines of the enclosed volume of a space ship by using a thrust levitation force field. The contention is that when a thrust levitation attractive force is employed within a confined volume that then the interior size of this volume actually increases and this increased interior volume is available for use by any objects or living creatures that reside inside of the volume. In order to implement a gravitational field space-time distortion generation system, the interior floor of the ship would be designed in normal space such that it would be a convex floor that would extend to the circular perimeter walls of the ship. Then a high performance cylindrical traction beam system would be placed just below the convex floor in the center of the ship and the traction beam system would be directed upward through the floor of the ship towards the outer circular perimeter walls of the ship.

By operating the gravitational field space-time distortion generation system at an appropriately high power level, the perimeter wall region of the interior of the ship should be significantly increased in size and in radius as measured inside and from the center of the ship. The result is that once the interior perimeter dimensions and volume of the ship have been increased in size by the gravitational field space-time (volume) distortion generation system, then the interior outfitting of the ship could be completed. The increased dimensions of the field distorted interior volume of the ship would be maintained by designing the gravitational field volume distortion generation system to be turned on and powered up permanently by using fail safe implementations. Until adequate experience is obtained, it would be appropriate to implement system designs that would allow the volume distortion generation system to be powered on and off.

The power level of the gravitational field distortion generation system could be applied such that the resulting cylindrical radiating traction beam effect would allow a person to walk towards the outer perimeter edge of the inside wall of the ship. As a person walks across the convex floor, the floor on which the person was starting would always seem to be in the vertical downward gravitational field direction. In empty space, far from any central accelerating gravitational field mass and while the ship was sitting still in space, or equivalently coasting along, a 1 $g_0$ gravitational field would be maintained towards the convex floor inside of the ship by the onboard gravitational field distortion generation system. Additionally, when a ship is underway, then a constant 1 $g_0$ gravitational field could be maintained onboard the entire floor region of the ship by superimposing a gravity field compensation system within the ship interior areas.

A principle advantage of using a spatial warp system onboard a star ship is that it would allow a smaller ship exterior size, structure, and mass to be used for the ship, for any given crew size, and thereby allow a star ship to achieve higher warp speeds at lower overall power consumption levels.

With regard to systems and components above referred to, but not otherwise specified or described in detail herein, the workings and specifications of such systems and components and the manner in winch they may be made or assembled or used, both cooperatively with each other and with the other elements of the invention described herein to effect the purposes herein disclosed, are all believed to be well within the knowledge of those skilled in the art. No concerted attempt to repeat here what is generally known to the artisan has therefore been made.

## INDUSTRIAL APPLICABILITY

The invention has applicability to the propulsion and force generation technology fields, particularly for the propulsion of air and space vehicles, controls, and force field generators. The invention provides breakthrough technology and apparatus for propelling and controlling vehicles, and for attracting and repelling masses in force fields.

In compliance with the statute, the invention has been described in language more or less specific as to structural features. It is to be understood, however, that the invention is not limited to the specific features shown, since the means and construction shown comprise preferred forms of putting the invention into effect. The invention is, therefore, claimed in any of its forms or modifications within the legitimate and valid scope of the appended claims.

## Claims

1. A thrust levitation mechanism comprising:

   a main rotor (101; 5) having a centre (102); a periphery (104), and a rotational axis (1), the rotor adapted for rotation about the rotational axis and describing a rotor plane (103) passing substantially through the centre of the rotor and the periphery; the rotor further comprising
   a plurality of lifting rotor locations (105, 106) disposed about the periphery; and
   at least one driven lifting rotor (2) located at each lifting rotor location, each said lifting rotor having a rotational axis lying substantially in the rotor plane of said main rotor and oriented substantially tangent to the main rotor periphery at its lifting rotor location;

   whereby simultaneous rotation of the main rotor and the lifting rotors induces in said mechanism a force directed substantially along the rotational axis of the main rotor.

2. The mechanism of claim 1 wherein said main rotor is comprised of a star wheel, the periphery of the star wheel comprising a plurality of joined side sections (107) interconnected by means of support sections (108) attached to side sections joints (109) substantially opposite across the wheel from said side sections, said support sections passing close to but not through the rotational axis of the main rotor, and wherein each side section comprises a lifting rotor location.

3.  The mechanism of claim 1 wherein said lifting rotors are driven by frictional contact with a circumferential drive surface on said main rotor.

4.  The mechanism of claim 1 wherein at least one of said lifting rotors comprises a bob rotor (30).

5.  The mechanism of claim 1 wherein at least one of said lifting rotors comprises a disk rotor (2).

6.  The mechanism of claim 5 wherein the rotational axis of at least one of said disk rotors is oriented substantially tangent to the main rotor periphery and offset from lying within the rotor plane of the main rotor by a selectable pitch angle to yield a reactive component of torque about the rotational axis of the main rotor to drive said main rotor, whereby, in comparison to the period of rotation of the main rotor, instantaneous control and variation of the induced force may be obtained.

7.  The mechanism of claim 1 further including a second main rotor adapted for rotation in a sense opposite to that of said first main rotor.

8.  The mechanism of claim 1 having a star wheel main rotor configuration comprising at least one disk rotor selected from the group comprising prop rotors (31), bob rotors, and lifting disk rotors.

9.  A vehicle (119) incorporating at least one thrust levitation mechanism as claimed in claim 1, whereby simultaneous rotation of the main rotor and the lifting rotors induces in said mechanism a force directed substantially along the rotational axis of the main rotor to propel the vehicle.

10. A reaction propulsion mechanism for propelling a vehicle (119) in a desired direction, the mechanism comprising a thrust levitation mechanism as claimed in claim 1, further comprising a plurality of lifting rotor locations disposed symmetrically about the periphery; wherein each said lifting rotor has a rotational axis lying substantially in the rotor plan of said main rotor and oriented substantially tangent to the rotor main periphery at a selectively variable skew angle ($\varnothing_s$) within said rotor plane; and whereby the vehicle may be propelled in said desired direction.

11. The reaction propulsion mechanism of claim 10 wherein said lifting rotors may be synchronously rotated through said skew angle.

12. The reaction propulsion mechanism of claim 10 wherein said lifting rotors may be cyclically rotated through said skew angle.

13. The reaction propulsion mechanism of claim 10, wherein said lifting rotors comprise disk rotors adapted for controllable adjustment of the skew angle, such that a horizontal reaction may be induced in the mechanism which may be swept around the vehicle in either a clockwise or a counter clockwise direction.

14. An inertial field force beam transmitter and receiver system incorporating at least one thrust levitation mechanism as claimed in claim 1, the thrust levitation system being held substantially in place and driven by power applied to the main rotor and the lifting rotors; whereby a traction force beam is induced in a direction substantially along the rotational axis of the main rotor and a repulsion force beam is induced in substantially the opposite direction.

15. The apparatus of claim 14 wherein said lifting rotors comprise disk rotors.

16. The apparatus of claim 14 wherein said lifting rotors comprise bob rotors.

17. The mechanism of claim 14 wherein the rotational axis of at least one of said disk rotors is oriented substantially tangent to the main rotor periphery and offset from lying within the rotor plane of the main rotor by a selectable pitch angle ($\alpha_p$).

18. The apparatus of claim 1 or claim 14 wherein said lifting rotors are belt driven.

19. The apparatus of claim 14 wherein said lifting rotors are gear driven.

**20.** The mechanism of claim I wherein said main rotor is comprised of a star wheel, a periphery of the star wheel comprising a plurality of joined side sections interconnected by means of support sections attached to side sections joints substantially opposite across the wheel from said side sections, said support sections passing close to but not through a rotational axis of the main rotor passing through the centre of the rotor and substantially orthogonally disposed relative to said periphery, and wherein each side section comprises a lifting rotor location.

**21.** The mechanism of claim 1, wherein the motion of each of said lifting rotors comprises rotation about two distinct orthogonal axes;
such that the rotation of an individual mass element in each of said rotors comprises rotation in an azimuthal angular direction in a horizontal plane about the vertical axis of a main rotor and in a zenith angular direction in a vertical plane about an axis that is perpendicular to the arm to which said mass element is attached;
whereby the rotational driven motions of the spinning lifting rotors produce all of the reaction forces of thrust levitation.

**22.** The mechanism of claim 1 wherein at least one of said lifting rotors comprises a bob rotor system;
wherein a bob rotor system can be used to implement thrust levitation and thrust levitation control and may consist of various configurations; which are typified by a driven prop rotor with arms and with a free wheeling bob rotor attached to the ends of each of the prop rotor arms; configured such that each of the bob rotors can be swivelled in unison and in a precisely controlled fashion about each of the prop rotor arms through and to an angular setting which can remain constant and can be held fixed if desired and which is identified as a pitch angle where the pitch angle axis of rotation is a prop rotor arm.

**23.** The mechanism of claim 1 wherein at least one of said lifting rotors comprises a disk rotor ;
wherein a system of said disk rotors can be used to implement thrust levitation and thrust levitation control and wherein said disk rotors may comprise various configurations;
which are typified by a disk having an outer perimeter, with a majority of the mass of the disk being disposed about the outer perimeter, such that the mass has an inner radius, an outer radius, and a width that is a small fraction of the outer disk radius such that the disk would be described as thin;
whereby the power efficiency of the thrust levitation system is inversely proportional to or inversely sensitive to the thickness of the disk rotors used to implement the thrust levitation mechanism.

**24.** The mechanism of claim 1 wherein said lifting rotors are offset from the vertical by pitch angle rotations about the main rotor arms to yield; a reactive and angular momentum component of torque about the axis of the main rotor to drive said main rotor; and
a nearly, in comparison to the period of the main rotor, instantaneous control and variation of the vertical lifting force produced by any particular and by each lifting rotor.

**25.** The mechanism of claim 1 wherein separate angular positions of the individual lifting rotors, referred to as the skew angles, can used to implement horizontal thrust levitation propulsion and control;
wherein the lifting rotors are dynamically rotated back and forth such that reaction and momentum effects are induced to produce controlled horizontal forces; and
wherein the lifting rotors are rotated in unison, or cyclically, and with controlled synchronous offsets about a set of vertical axes along or near the main rotor radial arms that are associated with the skew angle of and for each of the lifting rotors.

**26.** The mechanism of claim 1 having high energy efficiency comprising:

the ability of the thrust levitation system to operate at high efficiency levels of, for example 90 percent in terms of the utilisation of available output engine power, and based on efficiency levels that are a function of the parametric design parameters that are developed and selected in accordance with thrust levitation system technology.

**27.** The mechanism of claim 2 or claim 20 wherein said main rotor comprises a heptagonal star wheel comprising seven side sections and seven support sections.

**28.** An inertial field force beam transmission and/or transmitter-receiver system comprising:

a thrust levitation mechanism as claimed in claim 1;

said thrust levitation mechanism being held substantially in place and driven with power applied to the main rotor and the lifting rotors;

whereby a thrust levitation force is projected to a distance and induced at a distance as a traction force beam above the thrust levitation system and as a repulsion force beam below the thrust levitation system.

**29.** Vehicle classes implementing thrust levitation vehicle configurations having thrust levitation apparatus (117) as claimed in claim 1, wherein said vehicle configurations comprise:

advanced space and terrestrial craft vehicle planforms, designs, and mechanisms.

**30.** A vehicle class configuration according to claim 30 wherein said vehicle configuration comprises:

a design that allows the vehicle to travel vertically and simultaneously to travel equally well either in the forward or in the aft directions;
a high performance space and terrestrial landing craft design consisting of a rectangular planform that is wedge shaped on the top on both the forward end and on the aft end and is flat on the bottom of the vehicle.

**Patentansprüche**

**1.** Auf schubbasierender Schwebemechanismus, der aufweist:

einen Hauptrotor (101; 5) mit einem Zentrum (102), einem Umfang (104) und einer Drehachse (1), wobei der Rotor für ein Drehen um die Drehachse ausgelegt ist und eine Rotorebene (103) beschreibt, die im Wesentlichen durch das Zentrum des Rotors und den Umfang verläuft; wobei der Rotor ferner mehrere Hubrotdrpositionen (105, 106) aufweist, die um den Umfang angeordnet sind; und
wenigstens einen an jeder Hubrotorposition angeordneten angetriebenen Hubrotor (2), wobei jeder Hubrotor eine Drehachse besitzt, die im Wesentlichen in der Rotorebene des Hauptrotors liegt und an der Hubrotorposition im Wesentlichen so ausgerichtet ist, dass sie den Hauptrotorumfang an ihrer Hubrotorposition tangiert;

wobei ein gleichzeitiges Drehen des Hauptrotors und der Hubrotoren in dem Mechanismus eine Kraft hervorruft, die im Wesentlichen in Richtung der Drehachse des Hauptrotors wirkt.

**2.** Mechanismus nach Anspruch 1, bei welchem der Hauptrotor aus einem Sternrad besteht, dessen Umfang mehrere aneinander gefügte Seitenabschnitte (107) aufweist, die durch Halteabschnitte (108), die an Seitenabschnittverbindungsstellen (109) im Wesentlichen auf der den Seitenabschnitten gegenüberliegenden Seite des Rades angebracht sind, miteinander verbunden sind, wobei die Halteabschnitte nahe der Drehachse des Hauptrotors, jedoch nicht durch diese verlaufen und wobei jeder Seitcnabschnitt eine Hubrotorposition aufweist.

**3.** Mechanismus nach Anspruch 1, wobei die Hubrotoren durch Reibschluss mit einer umlaufenden Antriebsfläche an dem Hauptrotor angetrieben werden.

**4.** Mechanismus nach Anspruch 1, wobei wenigstens einer der Hubrotorcn einen rasche Auf- und Abwärtsbewegungen ausführenden Rotor (30) aufweist.

**5.** Mechanismus nach Anspruch 1, wobei wenigstens einer der Hubrotoren einen Scheibenrotor (2) umfasst.

**6.** Mechanismus nach Anspruch 5, wobei die Drehachse wenigstens eines der Scheibenrotoren im Wesentlichen tangential zum Hauptrotorumfang orientiert und durch einen wählbaren Anstellwinkel aus der Lage in der Rotorebene des Hauptrotors verschoben ist, um eine Rückstoßkraftkomponente des Drehmoments um die Drehachse des Hauptrotors zu liefern, um den Hauptrotor anzutreiben, wodurch eine im Vergleich zur Umlaufzeit des Hauptrotors sofortige Steuerung und Veränderung der hervorgerufenen Kraft erzielt werden kann.

**7.** Mechanismus nach Anspruch 1, der ferner einen zweiten Hauptrotor enthält, der für ein Drehen in einem Richtungssinn ausgelegt ist, der jenem des ersten Hauptrotors entgegengesetzt ist.

**8.** Mechanismus nach Anspruch 1 mit einer Sternrad-Konfiguration des Hauptrotors, der wenigstens einen Scheibenrotor aufweist, der aus der Gruppe ausgewählt ist, die Kipprotoren (31), rasche Auf- und Abwärtsbewegungen ausführende Rotoren und Hubscheibenrotoren enthält.

9. Fahrzeug (119), das wenigstens einen Schubschwebemechanismus nach Anspruch 1 enthält, wodurch das gleichzeitige Drehen des Hauptrotors und der Hubrotoren in dem Mechanismus eine Kraft hervorruft, die im Wesentlichen in Richtung der Drehachse des Hauptrotors wirkt, um das Fahrzeug anzutreiben.

10. Rückstoßantriebsmechanismus zum Antreiben eines Fahrzeugs (119) in einer gewünschten Richtung, wobei der Mechanismus einen Schubschwebemechanismus nach Anspruch 1 aufweist, der ferner aufweist:

mehrere Hubrotorpositionen, die symmetrisch um den Umfang angeordnet sind; wobei jeder Hubrotor eine Drehachse besitzt, die im Wesentlichen in der Rotorebene des Hauptrotors liegt und so orientiert ist, dass sie bei einem gezielt veränderbaren Neigungswinkel ($\emptyset_s$) in der Rotorebene im Wesentlichen den Hauptrotorumfang tangiert, wodurch das Fahrzeug in die gewünschte Richtung getrieben werden kann.

11. Rückstoßantriebsmechanismus nach Anspruch 10, wobei die Hubrotoren durch den Neigungswinkel synchron gedreht werden können.

12. Rückstoßantriebsmechanismus nach Anspruch 10, wobei die Hubrotoren durch den Neigungswinkel zyklisch gedreht werden können.

13. Rückstoßantriebsmechanismus nach Anspruch 10, wobei die Hubrotoren Scheibenrotoren aufweisen, die für ein steuerbares Einstellen des Neigungswinkels ausgelegt sind, so dass in dem Mechanismus eine horizontale Rückstoßkraft hervorgerufen werden kann, die entweder in Uhrzeigerrichtung oder entgegen der Uhrzeigerrichtung um das Fahrzeug streichen kann.

14. Trägheitskraft-Richtstrahl-Sende- und -Empfangssystem, welches wenigstens einen auf schubbasierenden Schwebemechanismus nach Anspruch 1 enthält, wobei das Schubschwebesystem durch die Energie, die auf den Hauptrotor und die Hubrotoren übertragen wird, im Wesentlichen an Ort und Stelle gehalten und angetrieben wird; wodurch in einer Richtung im Wesentlichen längs der Drehachse des Hauptrotors ein Zugkraftstrahl und in der im Wesentlichen entgegengesetzten Richtung ein Abstoßungskraftstrahl hervorgerufen wird.

15. Vorrichtung nach Anspruch 14, wobei die Hubrotoren Scheibenrotoren aufweisen.

16. Vorrichtung nach Anspruch 14, wobei die Hubrotoren rasche Auf- und Abwärtsbewegungen ausführende Rotoren aufweisen.

17. Mechanismus nach Anspruch 14, wobei die Drehachse wenigstens eines der Scheibenrotoren im Wesentlichen tangential zum Hauptrotorumfang orientiert und durch einen wählbaren Anstellwinkel ($\alpha_p$) aus der Lage in der Rotorebene des Hauptrotors verschoben ist.

18. Vorrichtung nach Anspruch 1 oder Anspruch 14, wobei die Hubrotoren riemengetrieben sind.

19. Vorrichtung nach Anspruch 14, wobei die Hubrotoren Zahnradgetrieben sind.

20. Mechanismus nach Anspruch 1, wobei der Hauptrotor aus einem Sternrad besteht, wobei ein Umfang des Sternrades mehrere aneinander gefügte Seitenabschnitte aufweist, die durch Halteabschnitte, die an Seitenabschnittverbindungsstellen im Wesentlichen auf der den Seitenabschnitten gegenüberliegenden Seite des Rades angebracht sind, miteinander verbunden sind, wobei die Halteabschnitte nahe der Drehachse des Hauptrotors, jedoch nicht durch diese hindurch verlaufen, wobei sie durch das Zentrum des Rotors verlaufen und im Wesentlichen orthogonal in Bezug auf den Umfang angeordnet sind, und wobei jeder Seitenabschnitt eine Hubrotorposition umfasst.

21. Mechanismus nach Anspruch 1, wobei die Bewegung jedes der Hubrotoren ein Drehen um zwei verschiedene, orthogonale Achsen umfasst; so dass die Drehung eines einzelnen Masseelements in jedem der Rotoren ein Drehen in einer Azimutwinkelrichtung in einer horizontalen Ebene um die vertikale Achse eines Hautrotors und in einer Zenitwinkelrichtung in einer vertikalen Ebene um eine Achse, die senkrecht zu dem Arm ist, an dem das Masseelement angebracht ist, umfasst;

wodurch die Drehantriebsbewegungen der sich schnell drehenden Hubrotoren alle Reaktionskräfte für den Schubschwebezustand erzeugen.

22. Mechanismus nach Anspruch 1, wobei wenigstens einer der Hubrotoren ein rasche Auf- und Abwärtsbewegungen ausführendes Rotorsystem aufweist;

wobei ein rasche Auf- und Abwärtsbewegungen ausführendes Rotorsystem benutzt werden kann, um das Schweben durch Schub und die Steuerung des Schwebens durch Schub auszuführen, und verschiedene Konfigurationen aufweisen kann,

die durch einen angetrieben Kipprotor mit Armen und mit einem rasche Aufund Abwärtsbewegungen ausführenden Freilaufrator, der an den Enden jedes der Kipprotorarme angebracht ist, typisiert sind;

wobei er so konfiguriert ist, das jeder der rasche Auf- und Abwärtsbewegungen ausführenden Rotoren im Gleichklang und in einer präzise gesteuerten Art und Weise um jeden der Kipprotorarme bis zu einer und in eine Winkeleinstellung geschwenkt werden kann, die unveränderlich bleiben und auf Wunsch festgehalten werden kann und die als ein Anstellwinkel identifiziert wird, wobei die Anstellwinkelachse der Drehung ein Kipprotorarm ist.

23. Mechanismus nach Anspruch 1, wobei wenigstens einer der Hubrotoren einen Scheibenrotor aufweist;

wobei ein System aus Scheibenrotoren benutzt werden kann, um das Schweben durch Schub und die Steuerung des Schwebens durch Schub auszuführen, und wobei die Scheibenrotoren verschiedene Konfigurationen aufweisen können,

die durch eine Scheibe mit einer äußeren Begrenzung typisiert sind, wobei der überwiegende Teil der Masse der Scheibe in der Nähe der äußeren Begrenzung angeordnet ist, so dass die Masse einen Innenradius, einen Außenradius und eine Breite von einem kleinen Bruchteil des Scheibenaußenradius hat, so dass die Scheibe als dünn beschrieben werden kann;

wodurch der Leistungsgrad des schubbasierenden Schwebesystems umgekehrt proportional zur Dicke der Scheibenrotoren ist, die benutzt werden, um den schubbasierenden Schwebemechanismus zu verwirklichen.

24. Mechanismus nach Anspruch 1, wobei die Hubrotoren mittels Anstellwinkeldrehungen um die Hauptrotorarme aus der Vertikalen gebracht sind, um eine Rückstoßkraft- und Impulsmoment-Komponente des Drehmoments um die Achse des Hauptrotors zu erzeugen, um den Hauptrotor anzutreiben; und

um eine im Vergleich zu der Zeit für den Hauptrotor nahezu sofortige Steuerung und Änderung der vertikalen Auftriebskraft, die durch einen bestimmten und durch jeden Hubrotor erzeugt wird, hervorzubringen.

25. Mechanismus nach Anspruch 1, wobei gesonderte Winkelpositionen der einzelnen Hubrotorcn, die als Neigungswinkel bezeichnet sind, benutzt werden können, um einen Horizontalschubschwebeantrieb und eine Horizontalschubschwebesteuerung zu verwirklichen;

wobei die Hubrotoren dynamisch hin und her gedreht werden, derart, dass Rückstoßkraft- und Impulswirkungen hervorgerufen werden, um gesteuerte horizontale Kräfte zu erzeugen; und

wobei die Hubrotoren im Gleichklang oder zyklisch und mit einem gesteuerten synchronen Versatz um einen Satz vertikaler Achsen längs oder nahe der radialen Arme des Hauptrotors, die dem Neigungswinkel jedes und für jeden der Hubrotoren zugeordnet sind, gedreht werden.

26. Mechanismus nach Anspruch 1, der einen hohen energetischen Wirkungsgrad besitzt, mit der Fähigkeit des schubbasierenden Schwebesystems, bei hohen Wirkungsgraden von beispielsweise 90 Prozent bezüglich der Nutzung der verfügbaren Abgabeleistung der Maschine und basierend auf Wirkungsgraden, die von den Parametern des Parameterdesigns abhängig sind, die in Übereinstimmung mit der Technologie des schubbasierenden Schwebesystems entwickelt und ausgewählt worden sind, wirksam zu sein.

27. Mechanismus nach Anspruch 2 oder Anspruch 20, wobei der Hauptrotor ein heptagonales Sternrad aufweist, das sieben Seitenabschnitte und sieben Halteabschnitte aufweist,

28. Trägheitskraft-Richtstrahl-Übertragungs- und/oder -Sende- und -Empfangssystem, das aufweist:

einen auf schubbasierenden Schwebemechanismus nach Anspruch 1;

wobei der auf schubbasierende Schwebemechanismus durch die Energie, die auf den Hauptrotor und die Hubrotoren übertragen wird, im Wesentlichen an Ort und Stelle gehalten und angetrieben wird;

wodurch eine schubbasierende Schwebekraft auf eine Entfernung projizielt wird und in einer Entfernung als ein Zugkraftstrahl über dem schubbasierenden Schwebesystem und als ein Abstoßungskraftstrahl unter dem schubbasierenden Schwebesystem hervorgerufen wird.

29. Fahrzeugklasse, die Schubschwebe-Fahrzeugkonfigurationen mit einer Schubschwebevorrichtung (117) nach Anspruch 1 verwirklicht, wobei die Fahrzeugkonfiguration aufweist:

Grundrisse, Konstruktionen und Mechanismen für hochentwickelte Weltraumfahrzeuge und terrestrische Luftfahrzeuge.

30. Fahraeugklassenkonfiguration nach Anspruch 30, wobei die Fahrzeugkonfiguration aufweist:

eine Konstruktion, die dem Fahrzeug ermöglicht, sich vertikal fortzubewegen und sich gleichzeitig genauso gut entweder in der Vorwärts- oder in der Rückwärtsrichtung fortzubewegen;
eine Konstruktion als landefähiges Hochleistungsweltraum- und -luftfahrzeug, das einen rechtwinkligen Grundriss aufweist und an der Oberseite sowohl des vorderen Endes als auch des hinteren Endes keilförmig ist und am Fahreeugboden platt ist.

## Revendications

1. Mécanisme de sustentation par poussée comprenant :

un rotor principal (101; 5) possédant un centre (102), une périphérie (104) et un axe de rotation (1), le rotor étant adapté en vue d'une rotation autour de l'axe de rotation et décrivant un plan (103) de rotor passant sensiblement à travers le centre du rotor et la périphérie; le rotor comprenant en outre

une pluralité de positions (105, 106) de rotor sustentateur, disposées autour de la périphérie; et
au moins un rotor sustentateur (2) entraîné situé à chaque position de rotor sustentateur, chaque dit rotor sustentateur ayant un axe de rotation se trouvant sensiblement dans le plan de rotor dudit rotor principal et orienté sensiblement tangentiellement à la périphérie du rotor principal au niveau de sa position de rotor sustentateur;

ce par quoi une rotation simultanée du rotor principal et des rotors sustentateurs induit dans ledit mécanisme une force dirigée sensiblement le long de l'axe de rotation du rotor principal.

2. Mécanisme selon la revendication 1, dans lequel ledit rotor principal se compose d'une roue en étoile, la périphérie de la roue en étoile comprenant une pluralité de sections latérales réunies (107), reliées les unes aux autres au moyen de sections de support (108) fixées à des articulations (109) de sections latérales sensiblement à l'opposé en traversant la roue à partir desdites sections latérales, lesdites sections de support passant près de l'axe de rotation du rotor principal mais ne le traversant pas, et dans lequel chaque section latérale comprend une position de rotor sustentateur.

3. Mécanisme selon la revendication 1, dans lequel lesdits rotors sustentateurs sont entraînés à l'aide d'un contact par frottement avec une surface d'entraînement circonférentielle sur ledit rotor principal.

4. Mécanisme selon la revendication 1, dans lequel au moins l'un desdits rotors sustentateurs comprend un rotor à masselotte (30).

5. Mécanisme selon la revendication 1, dans lequel au moins l'un desdits rotors sustentateurs comprend un rotor à disque (2).

6. Mécanisme selon la revendication 5, dans lequel l'axe de rotation d'au moins l'un desdits rotors à disque est orienté sensiblement tangentiellement à la périphérie du rotor principal et décalé de sa position dans le plan de rotor du rotor principal d'un angle de pas sélectionnable afin de produire une composante réactive de couple autour de l'axe de rotation du rotor principal afin d'entraîner ledit rotor principal, ce par quoi, en comparaison de la période de rotation du rotor principal, une commande et une variation instantanées de la force induite peuvent être obtenues.

**7.** Mécanisme selon la revendication 1, comportant en outre un deuxième rotor principal adapté en vue d'une rotation dans un sens opposé à celui dudit premier rotor principal.

**8.** Mécanisme selon la revendication 1, ayant une configuration de rotor principal à roue en étoile, comprenant au moins un rotor à disque choisi dans le groupe comprenant les rotors-hélices (31), les rotors à masselotte et les rotors à disque sustentateurs.

**9.** Véhicule (119) incorporant au moins un mécanisme de sustentation par poussée selon la revendication 1,
ce par quoi la rotation simultanée du rotor principal et des rotors sustentateurs induit dans ledit mécanisme une force dirigée sensiblement le long de l'axe de rotation du rotor principal pour propulser le véhicule.

**10.** Mécanisme de propulsion à réaction pour propulser un véhicule (119) dans une direction souhaitée, le mécanisme comprenant un mécanisme de sustentation par poussée selon la revendication 1, comprenant en outre
une pluralité de positions de rotor sustentateur disposées symétriquement autour de la périphérie; dans lequel chaque dit rotor sustentateur possède un axe de rotation se trouvant sensiblement dans le plan de rotor dudit rotor principal et orienté sensiblement tangentiellement à la périphérie principale du rotor selon un angle oblique qu'on peut modifier par sélection ($\theta_S$) dans ledit plan de rotor; et ce par quoi le véhicule peut être propulsé dans ladite direction souhaitée.

**11.** Mécanisme de propulsion à réaction selon la revendication 10, dans lequel lesdits rotors sustentateurs peuvent être tournés de façon synchrone à travers ledit angle oblique.

**12.** Mécanisme de propulsion à réaction selon la revendication 10, dans lequel lesdits rotors sustentateurs peuvent être tournés de façon cyclique à travers ledit angle oblique.

**13.** Mécanisme de propulsion à réaction selon la revendication 10, dans lequel lesdits rotors sustentateurs comprennent des rotors à disque adaptés en vue d'un ajustement de l'angle oblique sur lequel on peut agir, de sorte à pouvoir induire une réaction horizontale dans le mécanisme qui peut être appliquée autour du véhicule dans le sens des aiguilles d'une montre ou dans le sens inverse des aiguilles d'une montre.

**14.** Système émetteur et récepteur de faisceaux de forces de champ inertiel incorporant au moins un mécanisme de sustentation par poussée selon. la revendication 1,
le système de sustentation par poussée étant maintenu sensiblement en place et entraîné par une puissance appliquée au rotor principal et aux rotors sustentateurs;
ce par quoi un faisceau de forces de traction est induit dans une direction sensiblement le long de l'axe de rotation du rotor principal et un faisceau de forces de répulsion est induit dans sensiblement la direction opposée.

**15.** Appareil selon la revendication 14, dans lequel lesdits rotors comprennent des rotors à disque.

**16.** Appareil selon la revendication 14, dans lequel lesdits rotors sustentateurs comprennent des rotors à masselotte.

**17.** Mécanisme selon la revendication 14, dans lequel l'axe de rotation d'au moins l'un desdits rotors à disque est orienté sensiblement tangentiellement à la périphérie du rotor principal et décalé de sa position dans le plan de rotor du rotor principal d'un angle de pas ($\alpha_p$) sélectionnable.

**18.** Appareil selon la revendication 1 ou la revendication 14, dans lequel lesdits rotors sustentateurs sont entraînés par courroie.

**19.** Appareil selon la revendication 14, dans lequel lesdits rotors sustentateurs sont entraînés par engrenages.

**20.** Mécanisme selon la revendication 1, dans lequel ledit rotor principal se compose d'une roue en étoile, une périphérie de la roue en étoile comprenant une pluralité de sections latérales réunies reliées entre elles au moyen de sections de support fixées aux articulations de sections latérales, sensiblement à l'opposé en traversant la roue à partir desdites sections latérales, lesdites sections de support passant près d'un axe de rotation du rotor principal mais ne le traversant pas, traversant le centre du rotor et sensiblement disposées orthogonalement par rapport à ladite périphérie, et dans lequel chaque section latérale comprend une position de rotor sustentateur.

**21.** Mécanisme selon la revendication 1, dans lequel le mouvement de chacun desdits rotors sustentateurs comprend une rotation autour de deux axes orthogonaux distincts;

de sorte que la rotation d'un élément de masse individuel dans chacun desdits rotors comprend la rotation dans une direction angulaire azimutale dans un plan horizontal autour de l'axe vertical d'un rotor principal et dans une direction angulaire zénithale dans un plan vertical autour d'un axe qui est perpendiculaire au bras auquel ledit élément de masse est fixé;

ce par quoi les mouvements entraînés par rotation des rotors sustentateurs tournants produisent toutes les forces de réaction de sustentation par poussée.

**22.** Mécanisme selon la revendication 1, dans lequel au moins l'un desdits rotors sustentateurs comprend un système de rotor à masselotte;

dans lequel un système de rotor à masselotte peut être employé pour mettre en oeuvre une sustentation par poussée et une commande de sustentation par poussée, et peut consister en différentes configurations;

qui sont **caractérisées par** un rotor-hélice entraîné avec des bras et avec un rotor à masselotte faisant roue libre fixé aux extrémités de chacun des bras du rotor-hélice;

configuré de telle sorte que chacun des rotors à masselotte peuvent être pivotés de concert et d'une façon commandée avec précision autour de chacun des bras de rotor-hélice à travers et jusqu'à un réglage angulaire qui peut rester constant et peut être maintenu fixe si souhaité, et qui est identifié comme étant un angle de pas où l'axe de rotation de l'angle de pas est un bras du rotor-hélice.

**23.** Mécanisme selon la revendication 1, dans lequel au moins un desdits rotors sustentateurs comprend un rotor à disque;

dans lequel un système desdits rotors à disque peut être employé pour mettre en oeuvre une sustentation par poussée et une commande de sustentation par poussée, et dans lequel lesdits rotors à disque peuvent consister en différentes configurations;

qui sont **caractérisées par** un disque ayant un périmètre externe, une plus grande part de la masse du disque étant disposée autour du périmètre externe, de sorte que la masse possède un rayon interne, un rayon externe et une largeur qui est une petite fraction du rayon du disque externe, de sorte que le disque serait décrit comme étant mince;

ce par quoi l'efficacité énergétique du système de sustentation par poussée est inversement proportionnelle ou inversement sensible à l'épaisseur des rotors à disque employés pour mettre en oeuvre le mécanisme de sustentation par poussée.

**24.** Mécanisme selon la revendication 1, dans lequel lesdits rotors sustentateurs sont décalés de la verticale par des rotations d'angle de pas autour des bras de rotor principal afin de produire :

une composante réactive et de moment angulaire de couple autour de l'axe du rotor principal afin d'entraîner ledit rotor principal; et

une commande et une variation, presque instantanées par rapport à la période du rotor principal, de la force sustentatrice verticale produite par tout rotor particulier et par chaque rotor sustentateur.

**25.** Mécanisme selon la revendication 1, dans lequel les positions angulaires séparées des rotors sustentateurs individuels, désignées par les angles obliques, peuvent être employées pour mettre en oeuvre une propulsion et commande de sustentation par poussée horizontale;

dans lequel les rotors sustentateurs sont tournés dynamiquement en va-et-vient de sorte que les effets de réaction et de moment sont induits afin de produire des forces horizontales commandées; et

dans lequel les rotors sustentateurs sont tournés de concert, ou cycliquement, et avec des décalages synchrones commandés autour d'un jeu d'axes verticaux le long ou proche des bras radiaux du rotor principal qui sont associés à l'angle oblique de chacun et pour chacun des rotors sustentateurs.

**26.** Mécanisme selon la revendication 1, ayant une efficacité énergétique élevée, comprenant :

la capacité du système de sustentation par poussée à fonctionner à des niveaux d'efficacité élevés, par exemple de 90 pourcent en termes de l'utilisation de la puissance de sortie du moteur disponible, et basée sur les niveaux d'efficacité qui sont une fonction des paramètres de la conception paramétrique qui sont développés et choisis selon la technologie du système de sustentation par poussée.

**27.** Mécanisme selon la revendication 2 ou la revendication 20, dans lequel ledit rotor principal comprend une roue en étoile heptagonale comprenant sept sections latérales et sept sections de support.

**28.** Système de transmission et/ou émetteur/récepteur de faisceaux de forces de champ inertiel comprenant :

un mécanisme de sustentation par poussée selon la revendication 1;

ledit mécanisme de sustentation par poussée étant maintenu sensiblement en place et entraîné avec la puissance appliquée au rotor principal et aux rotors sustentateurs;

ce par quoi une force de sustentation par poussée est projetée à distance et induite à distance en tant que faisceau de forces de traction au-dessus du système de sustentation par poussée et en tant que faisceau de forces de répulsion au-dessous du système de sustentation par poussée.

**29.** Classes de véhicules mettant en oeuvre des configurations de véhicule à sustentation par poussée ayant un appareil de sustentation par poussée (117) selon la revendication 1, lesdites configurations de véhicule comprenant :

les formes planes, constructions et mécanismes de véhicules servant d'engins spatiaux et terrestres avancés.

**30.** Configuration de classes de véhicules selon la revendication 29, ladite configuration de véhicule comprenant :

une construction qui permet aux véhicules de se déplacer verticalement et simultanément aussi bien dans le sens avant que dans le sens arrière;

une construction d'appareils d'atterrissage spatiaux et terrestres à hautes performances, consistant en une forme plane rectangulaire qui est en forme de coin sur la partie supérieure tant de l'extrémité avant que de l'extrémité arrière, et qui est plate sur la partie inférieure du véhicule.

FIG. 1A

FIG. 1B

EP 0 939 726 B1

FIG.3

FIG.2

# FIG. 4

# FIG. 5

FIG.6

FIG.7

# FIG.8

# FIG.9

FIG. 10

FIG. 11

FIG. 12

**Pounds / hp**

**Vehicle Category**

FIG.13

☒ BD-10 Bede, Estimated (With 9800 lbs thrust, 2900 lbs gross)

☒ P-38

■ Hughs 500D Helicopter (450 hp at rotor)

☐ UH-DH Huey Helicopter

▨ Sky Bolt

☐ Cessna Skymaster

■ DeHavilland Beaver DHC-2, Floats

▨ Cessna 180 Skywagon, Floats

■ Long EZ

▨ B-17G

▨ Taylor Craft, Floats

▨ B-24 Liberator

☐ Cessna 172

▨ Hornet UltraLight

■ Kit Fox III

☐ Thrust Levitation, Predicted (With 0.32 ft/sec^2 net vertical acceleration at sea level)

**Mass Fraction**

**Vehicle Category**

FIG.14

▨ Rocket, required with available average Isp, specific impulse LOX-H2

▨ Rocket, attainable with available materials, LOX-H2

☐ Thrust Levitation, estimated (With 0.32 ft/sec^2 net vertical acceleration at sea level)